# EUROPEAN PATENT APPLICATION

(11) **EP 3 403 775 A1**
(43) Date of publication of application: **21.11.2018**
(21) Application number: 16885104.6
(22) Date of filing: 19.12.2016
(51) Int. Cl.: B25J 11/00

(54) **ASSIST DEVICE**

(30) Priority: 15.01.2016 JP 2016006432; 15.01.2016 JP 2016006433; 15.01.2016 JP 2016006434; 15.01.2016 JP 2016006435; 15.01.2016 JP 2016006436
(71) Applicant: Kubota Corporation, Osaka-shi, Osaka 556-8601 (JP)
(72) Inventor: NISHIDA Keisuke, Sakai-shi Osaka 590-0823 (JP); HAYASHI Masahiko, Sakai-shi Osaka 590-0823 (JP); SAKANO Tomoyoshi, Sakai-shi Osaka 590-0823 (JP); TAKAKI Takahiro, Sakai-shi Osaka 590-0823 (JP); NAKATSUKA Masaki, Sakai-shi Osaka 590-0823 (JP); INOUE Yuta, Sakai-shi Osaka 590-0823 (JP); FUKUOKA Kazuki, Sakai-shi Osaka 590-0823 (JP)
(74) Representative: Cabinet Beau de Loménie
(86) International application number: PCT/JP2016/087820
(87) International publication number: WO 2017/122502

(57) **Abstract**

An assistance device includes rotating bodies that raise hand portions (20) by winding wires (18, 19) that extend downward from arm portions (2) and lower the hand portions (20) by unwinding the wires (18, 19), an electric motor that drives the rotating bodies to rotate in the winding direction and the unwinding direction, and a rotation speed sensor that detects the rotation speed of the rotating bodies. Based on the detection value of the rotation speed sensor, the electric motor is caused to operate in the winding direction such that the rotating body rotates in the winding direction in a set rotation speed that is set in advance.

## Description

### TECHNICAL FIELD

The present invention relates to an assistance device that is used while being worn by a worker and assists work (operations) performed by the worker.

### BACKGROUND ART

[1] Patent Document 1 discloses an assistance device that assists a worker who lifts and carries load-objects, or carries a care-dependent person. In Patent Document 1, the assistance device includes an exoskeleton torso (160), a load lifting mechanism (221) that extends forward from the exoskeleton torso, and a driving device that drives the load lifting mechanism.
   In the assistance device in Patent Document 1, the load lifting mechanism is provided with arm portions that extend forward from the exoskeleton torso, wires (lifting cables 222) that extend downward from the arm portions, and hand portions (end effectors 223) that are coupled to the wires and hold a load-object when held by the worker's hands.
   In Patent Document 1, the worker puts on the assistance device by attaching the exoskeleton torso to their body, and the worker holds the hand portions with their hands.
   Accordingly, while wearing the assistance device, the worker holds the load-object with the hand portions, and the load-object is supported by the hand portions in this state. The worker stabilizes the position of the load-object (prevents the load-object from swinging) by holding the hand portions in their hands.
   The hand portions (load-object) of the load lifting mechanism can be raised by winding the wires with the driving device provided in the main body portion, and the hand portions (load-object) of the load lifting mechanism can be lowered by unwinding the wires with the driving device.
[2] Patent Document 2 discloses an assistance device that assists a worker who lifts and carries load-objects, or carries a care-dependent person.
   The assistance device in Patent Document 2 includes a main body portion (waist belt 17) that is attached to the worker, right and left leg action portions (arms 19) that are supported by the main body portion and exert an action on right and left thigh portions of the worker, and right and left driving
   According to this configuration, while the worker is wearing the assistance device, when the worker picks up and walks with a load-object, the right and left leg action portions are driven by the right and left driving devices, and the walking of the worker is assisted by the assistance device.
[3] As described in Patent Document 1, an assistive suit that is an example of an assistance device includes a main body portion that can be worn by a user, lifting arms that extend from the main body portion forward and upward from the user when worn, lifting cord-like bodies that extend from the leading ends of the lifting arms, grip operation tools that are attached to extending end portions of the cord-like bodies and that are engageable with a load-object that is to be lifted, and a winch that winds and unwinds the cord-like bodies on the main body portion side. Also, in this type of assistive suit, the lifting arms that extend from the main body portion and the grip operation tools that are engageable with the load-object that is to be lifted are coupled via a cord-like body.

### PRIOR ART DOCUMENTS

### Patent Documents

Patent Document 1: JP 2013-531593 A (republication in Japanese text of WO 2011/127471 A1)
Patent Document 2: JP 2013-052192 A (or see WO 2013/035814 A1 or US 2014/0212243 A1 corresponding thereto)

### SUMMARY OF THE INVENTION

### Problem to be Solved by the Invention

[1] The following are problems corresponding to Background Art [1] above.
   As previously described, the driving device includes a rotating body that winds and unwinds wires, and an electric motor that drives the rotating body to rotate in the winding direction and the unwinding direction in order to wind and unwind the wires.
   [1-1] In the case of the configuration described above, there is desire for an assistance device having a configuration in which the hand portions can be appropriately raised both when a load-object is held by the hand portions and when a load-object is not held by the hand portions.
   [1-2] On the other hand, in the case of the configuration described above, there is desire for an assistance device having a configuration in which, conversely to (1), the hand portions can be appropriately lowered both when a load-object is held by the hand portions and when a load-object is not held by the hand portions.
[2] The following are problems corresponding to Background Art [2] above.
   [2-1] In the state where the worker is wearing the assistance device described in Patent Document 2, besides the case where the worker holds a load-object and walks, a case can be envisioned in which, for example, the worker squats down to a load-object placed on the floor, grabs the load-object with their hands, and then stands up.
      In view of this, if the aforementioned case occurs repeatedly, an assistance device that can assist the standing up of the worker is conceivably useful.
   [2-2] On the other hand, in the state where the worker is wearing the assistance device described in Patent Document 2, besides the case where the worker holds a load-object and walks, a case can be envisioned in which, for example, the worker stands up to a load-object placed on a truck bed or the like, grabs the load-object with their hands, and then squats and places the load-object on the floor.
      In view of this, if the aforementioned case occurs repeatedly, an assistance device that can assist the squatting of the worker is conceivably useful.
[3] The following are problems corresponding to Background Art [3] above.

With the conventional assistive suit described above, there are risks such as not being able to perform a predetermined operation due to an insufficient remaining battery amount during an operation, and the occurrence of an operation malfunction due to overheating of the electric motor or the like, and there have been problems such as difficulty in obtaining high reliability as an assistive suit.

In order to solve such problems, it is conceivable to make it possible to use detection sensors to detect an insufficient remaining battery amount and overheating of the electric motor or the like, and make it possible to announce the detection results using some sort of audio warning or some sort of viewable display device. However, in general, assistive suits are often used in noisy work environments. Therefore, even if some sort of audio warning device or display device is provided, there are problems such as that the audio warning will not be noticed, or that it is difficult to make the display device viewable at all times during work, and therefore it is difficult for a situation change to be known quickly.

In view of this, there is desire for an assistance device that controls the operation state of a winch based on a state change of a pre-set detection target item in a drive output system, and facilitates accurately knowing an abnormal state in the drive output system even in a noisy work environment or in a situation where continuous viewing is difficult.

### SOLUTION TO THE PROBLEM

### [1]

[1-1] The following assistance device is proposed as a means for solving the problems corresponding to Problem [1-1].
   An assistance device including:
   a main body portion configured to be attached to a worker;
   an arm portion that extends forward from the main body portion;
   a wire that extends downward from the arm portion;
   a hand portion that is coupled to the wire and is configured to hold a load-object by being held by a hand of the worker;
   a rotating body configured to raise the hand portion by winding the wire, and to lower the hand portion by unwinding the wire;
   an electric motor that drives the rotating body to rotate in a winding direction and an unwinding direction;
   a rotation speed sensor that detects a rotation speed of the rotating body;
   a manual operation portion configured to be operated manually; and
   a control device configured to cause the electric motor to operate in the winding direction and the unwinding direction based on an operation signal from the manual operation portion,
   wherein based on a detection value of the rotation speed sensor, the control device causes the electric motor to operate in the winding direction such that the rotating body rotates in the winding direction at a set rotation speed that is set in advance.

According to this configuration, when a load-object is not held by the hand portion, or when a light load-object is held by the hand portion, the weight acting on the hand portion is small. Conversely, when a heavy load-object is held by the hand portion, the weight acting on the hand portion is large.

Accordingly, based on the detection value of the rotation speed sensor that detects the rotation speed of the rotating body, the electric motor operates in the winding direction such that the rotating body rotates in the winding direction at the set rotation speed that is set in advance, and therefore even if a large weight or a small weight is acting on the hand portion as previously described, the hand portion (load-object) is raised at a constant speed (set value), and the operation of raising the hand portion (load-object) to a goal position (height) can be performed accurately.

In a preferable embodiment, the assistance device further includes a set value change portion configured to, by being manually operated, change the set rotation speed to a faster speed or a slower speed.

According to this configuration, in the state where the hand portion (load-object) is raised at a constant speed (set rotation speed), by operating the set value change portion, the worker can change the set rotation speed, which is the rotation speed of the rotating body (electric motor) to a faster or slower speed.

Accordingly, it is possible to set an appropriate raising speed for the hand portion according to worker experience and the work situation, and it is possible to improve work efficiency.

In a preferable embodiment, a support member extends from the main body portion on a right side or a left side of a waist portion of the worker, and
the set value change portion is provided on the support member.

According to this configuration, the support member extends from the main body portion on the right side or the left side of the waist portion of the worker, and the set value change portion is provided on the support member.

Accordingly, in the case where the worker wearing the assistance device operates the set value change portion, the set value change portion is located on the right side (left side) of the waist portion of the worker, and therefore the worker can easily operate the set value change portion with their right hand (left hand).

In this case, the set value change portion is not located on the front side of the worker, and therefore even if the load-object held by the hand portion is located in front of the worker, the load-object does not come into contact with the set value change portion, and the set value change portion is not damaged due to coming into contact with the load-object.

In a preferable embodiment, the assistance device further includes: a right leg action portion that is supported by the main body portion and is configured to act on a right thigh portion of the worker; and
a left leg action portion that is supported by the main body portion and is configured to act on a left thigh portion of the worker,
wherein the control device causes the right and left leg action portions to move downward so as to move the right and left thigh portions of the worker downward to assist standing up of the worker, and
the right and left leg action portions are each the support member.

According to this configuration, the standing up of the worker can be assisted by causing the right and left leg action portions to move downward so as to move the right and left thigh portions of the worker downward. Accordingly, when the worker squats, grabs the load-object with their hands, and then stands up, the worker can stand up easily, and work efficiency can be improved.

Also, the right and left leg action portions act on the right and left thigh portions of the worker, and therefore are located on the right side and the left side of the waist portion of the worker (positions near the right side or left side of the waist portion of the worker). Accordingly, by providing the set value change portion on the right or left leg action portion, the right or left leg action portion can also serve as the support member for the setting change portion, and this is advantageous in terms of structure simplification.
[1-2] The following assistance device is proposed as a means for solving the problems corresponding to Problem [1-2].
   An assistance device including:
   a main body portion configured to be attached to a worker;
   an arm portion that extends forward from the main body portion;
   a wire that extends downward from the arm portion;
   a hand portion that is coupled to the wire and is configured to hold a load-object by being held by a hand of the worker;
   a rotating body configured to raise the hand portion by winding the wire, and to lower the hand portion by unwinding the wire;
   an electric motor that drives the rotating body to rotate in a winding direction and an unwinding direction;
   a rotation speed sensor that detects a rotation speed of the rotating body;
   a manual operation portion configured to be operated manually; and
   a control device configured to cause the electric motor to operate in the winding direction and the unwinding direction based on an operation signal from the manual operation portion,
   wherein in a state where the electric motor is operating in the unwinding direction, if a detection value of the rotation speed sensor changes to a value higher than a predetermined value, the control device causes the electric motor to generate drive force in the winding direction so as to apply resistance to unwinding direction rotation of the rotating body.

According to this configuration, when a load-object is not held by the hand portion, or when a light load-object is held by the hand portion, the weight acting on the hand portion is small.

According to this configuration, in the case where the worker operates the manual operation portion, and the rotating body starts to be driven to rotate in the unwinding direction by the electric motor, if a load-object is not being held by the hand portion, or a light load-object is being held by the hand portion, the lowering speed of the hand portion (the rotation speed of the rotating body in the unwinding direction) does not become a high speed due to the weight acting on the hand portion being small, and therefore the electric motor continues to drive the rotating body to rotate in the unwinding direction.

On the other hand, when a heavy load-object is being held by the hand portion, the weight acting on the hand portion is large. Accordingly, in the case where the worker operates the manual operation portion, and the rotating body starts to be driven to rotate in the unwinding direction by the electric motor, if a heavy load-object is being held by the hand portion, the hand portion attempts to descend at a high speed due to the large weight acting on the hand portion.

According to the present configuration, if the rotation speed of the rotating body exceeds a predetermined value, the electric motor generates a small drive force in the winding direction, which is opposite to the unwinding direction, and therefore the electric motor applies resistance to the unwinding direction rotation of the rotating body. Accordingly, even if a heavy load-object is being held by the hand portion, the hand portion (load-object) descends at an appropriate speed, and it is possible to accurately and easily perform an operation of lowering the hand portion holding the load-object and placing the load-object at a goal position.

In a preferable embodiment, in a state where the electric motor is operating in the unwinding direction, if the detection value of the rotation speed sensor changes to a value higher than the predetermined value,
the control device causes the electric motor to generate drive force in the winding direction so as to apply resistance to unwinding direction rotation of the rotating body such that the rotating body rotates in the unwinding direction at a set rotation speed that is set in advance.

According to this configuration, the small drive force generated by the electric motor in the winding direction is controlled, and the rotating body rotates in the unwinding direction at the set rotation speed that is set in advance. Accordingly, the hand portion descends at a constant speed, and therefore it is possible to accurately and easily perform an operation of lowering the hand portion holding the load-object and placing the load-object at a goal position.

In a preferable embodiment, the assistance device further includes a load detecting portion configured to detect a load applied to the electric motor,
wherein if a detection value of the load detecting portion decreases rapidly, the control device causes the electric motor to stop.

According to this configuration, when the hand portion holding the load-object is lowered, and the load-object is placed at a goal position, the weight of the load-object no longer acts on the electric motor, and the load acting on the electric motor decreases rapidly, and therefore the electric motor stops accordingly. Accordingly, it is possible to avoid a situation in which even though the hand portion that put down (separated from) the load-object has stopped, the rotating body unwinds the wire, and the wire becomes slack and tangled.

### [2]

[2-1] The following assistance device is proposed as a means for solving the problems corresponding to Problem [2-1].
   An assistance device including:
   a main body portion configured to be attached to a worker;
   a right leg action portion that is supported by the main body portion and is configured to act on a right thigh portion of the worker;
   a right driving device configured to drive the right leg action portion;
   a left leg action portion that is supported by the main body portion and is configured to act on a left thigh portion of the worker;
   a left driving device configured to drive the left leg action portion; and
   a control device,
   wherein the control device is configured to cause the right driving device and the left driving device to operate independently of each other,
   when the right driving device operates according to the control device, the right driving device drives the right leg action portion downward to lower the right thigh portion of the worker, and
   when the left driving device operates according to the control device, the left driving device drives the left leg action portion downward to lower the left thigh portion of the worker.

According to this configuration, the right driving device drives the right leg action portion downward, thus moving the right thigh portion of the worker downward, and the left driving device drives the left leg action portion downward, thus moving the left thigh portion of the worker downward, thereby making it possible to assist the standing up of the worker. Accordingly, when the worker squats, grabs the load-object with their hands, and then stands up, the worker can stand up easily, and work efficiency can be improved.

Also, when the worker squats, grabs the load-object with their hands, and then stands up, various states can be envisioned, such as the worker standing up with the right leg and the left leg at the same position, the state of standing up with the right leg located forward and the left leg located rearward, and the state of standing up with the left leg located forward and the right leg located rearward. According to the present configuration, the right and left driving devices are controlled and operated independently of each other, and the right and left leg action portions are driven downward independently of each other. Accordingly, regardless of the positional relationship between the right leg and the left leg when the worker stands up, it is possible to easily respond and appropriately move the right and left thigh portions downward, and it is possible to appropriately assist the standing up of the worker.

In a preferable embodiment, the assistance device further includes: a right angle sensor configured to detect an angle of the right leg action portion relative to the main body portion; and
a left angle sensor configured to detect an angle of the left leg action portion relative to the main body portion,
wherein the control device causes the right driving device to stop if the right leg action portion reaches an angle corresponding to a worker standing state based on a detection value of the right angle sensor, and
the control device causes the left driving device to stop if the left leg action portion reaches an angle corresponding to a worker standing state based on a detection value of the left angle sensor.

According to this configuration, when the worker stands up, the right and left leg action portions are driven downward independently of each other, thus assisting the standing up of the worker. Thereafter, if the right leg action portion (right leg) reaches an angle corresponding to the standing up state before the left leg action portion (left leg) for example, the right driving device (right leg action portion) stops first, and then the left driving device (left leg action portion) stops when the left leg action portion (left leg) reaches an angle corresponding to the standing up state. Therefore, according to a second feature of the present invention, a time difference can occur between the stopping of the right and left leg action portions when the worker stands up, thus making it possible to obtain an appropriate natural standing up state when the worker stands up.

In a preferable embodiment, the assistance device further includes: a right angle sensor configured to detect an angle of the right leg action portion relative to the main body portion; and
a left angle sensor configured to detect an angle of the left leg action portion relative to the main body portion,
wherein the control device causes the right and left driving devices to stop if at least one of the right and left leg action portions reaches an angle corresponding to a worker standing state based on detection values of the right and left angle sensors.

According to another feature of the invention in this configuration, when the worker stands up, the right and left leg action portions are driven downward independently of each other, thus assisting the standing up of the worker. Thereafter, if the right leg action portion (right leg) reaches an angle corresponding to the standing up state before the left leg action portion (left leg) for example, the right and left driving devices (right and left leg action portions) stop at the same time, and if the left leg action portion (left leg) reaches an angle corresponding to the standing up state before the right leg action portion (right leg) for example, the right and left driving devices (right and left leg action portions) stop at the same time.

Accordingly, the right and left leg action portions stop at the same time when the worker stands up, thus making it possible to obtain an appropriate natural standing up state when the worker stands up.

In a preferable embodiment, the assistance device further includes: a right angle sensor configured to detect an angle of the right leg action portion relative to the main body portion;
a left angle sensor configured to detect an angle of the left leg action portion relative to the main body portion; and
a manual operation portion configured to give, to the control device, an activation signal indicating starting of operation of the right and left driving devices,
wherein based on detection values of the right and left angle sensors at a time of operation of the manual operation portion, the control device causes the right and left driving devices to operate such that a drive force of a driving device of one of the right and left leg action portions that is at a higher location is larger than a drive force of a driving device of the other of the right and left leg action portions that is at a lower location.

When the worker squats, grabs the load-object with their hands, and then stands up, if the worker stands up with the right leg located forward and the left leg located rearward, it is thought that the worker puts a large amount of power in the right leg when standing up, whereas if the worker stands up with the left leg located forward and the right leg located rearward, it is thought that the worker puts a large amount of power in the left leg when standing up. According to the present configuration, in the case of standing up with the right leg located forward and the left leg located rearward, a large amount of drive force is generated by the right driving device (right leg action portion), and the standing up of the worker is appropriately assisted. Similarly, in the case of standing up with the left leg located forward and the right leg located rearward, a large amount of drive force is generated by the left driving device (left leg action portion), and the standing up of the worker is appropriately assisted.

In a preferable embodiment, the assistance device further includes: a right angle sensor configured to detect an angle of the right leg action portion relative to the main body portion;
a left angle sensor configured to detect an angle of the left leg action portion relative to the main body portion; and
a manual operation portion configured to give, to the control device, an activation signal indicating starting of operation of the right and left driving devices,
wherein based on detection values of the right and left angle sensors at a time of operation of the manual operation portion, the control device causes the right and left driving devices to operate such that a movement speed of a driving device of one of the right and left leg action portions that is at a higher location is faster than a movement speed of a driving device of the other of the right and left leg action portions that is at a lower location.

When the worker squats, grabs the load-object with their hands, and then stands up, if the worker stands up with the right leg located forward and the left leg located rearward, it is thought that the worker moves the right leg toward the standing up position sooner, whereas if the worker stands up with the left leg located forward and the right leg located rearward, it is thought that the worker moves the left leg toward the standing up position sooner. According to the present configuration, in the case of standing up with the right leg located forward and the left leg located rearward, the right leg action portion operates faster than the left leg action portion, and the standing up of the worker is appropriately assisted. Similarly, in the case of standing up with the left leg located forward and the right leg located rearward, the left leg action portion operates faster than the right leg action portion, and the standing up of the worker is appropriately assisted.
[2-2] The following assistance device is proposed as a means for solving the problems corresponding to Problem [2-2].
   An assistance device including:
   a main body portion configured to be attached to a worker;
   a leg action portion that is supported by the main body portion and is configured to act on a thigh portion of the worker; and
   a resistance device configured to apply resistance to upward movement of the leg action portion.

When the worker stands up, grabs a load-object with their hands, and then squats, if a heavy load-object is being held in particular, the worker attempts to squat slowly by putting power into their right and left legs. According to the present configuration, the assistance device includes the resistance device that applies resistance to upward movement of the leg action portion such that when the worker squats, sudden rising of the thigh portion of the worker is suppressed, and the thigh portion of the worker rises gradually. Accordingly, even if the worker does not put a particularly large amount of power into the right leg and the left leg, the worker can gradually raise their thigh portion and squat slowly, and therefore it is possible to squat easily while holding a heavy load-object and place the load-object on the floor.

In a preferable embodiment, the assistance device further includes: a driving device configured to drive the leg action portion downward so as to lower the thigh portion of the worker; and
a control device configured to control the driving device,
wherein the resistance device is the driving device, and
when the control device causes the driving device to generate drive force for driving the leg action portion downward, the driving device applies resistance to upward movement of the leg action portion.

For example, in the case of a load-object placed on a truck bed or the like, it is envisioned that the worker stands up, grabs the load-object with their hands, and then squats and places the load-object on the floor, and this is performed repeatedly sometimes. According to the present configuration, the driving device drives the leg action portion downward to move the thigh portion of the worker downward, thereby making it possible to assist the standing up of the worker. Accordingly, when the worker stands up, grabs the load-object with their hands, and then squats and places the load-object on the floor, the worker can stand up easily, and it is possible to improve the work efficiency.

Also, according to the present configuration, the driving device generates a small drive force for driving the leg action portion downward, thus applying resistance to the upward movement of the leg action portion. Accordingly, the driving device can be used for two functions, namely the function of assisting the standing up of the worker and the function for enabling the worker to squat slowly, and this is advantageous in terms of structure simplification and weight reduction.

In a preferable embodiment, the assistance device further includes: a speed detection device configured to detect an upward movement speed of the leg action portion,
wherein the control device controls the driving device such that a detection value of the speed detection device becomes a set value that is set in advance.

According to this configuration, by setting the set value to an appropriate value, the worker can squat at an appropriate speed (set value) that is neither too fast nor too slow, thus making it possible to easily and stably squat even when holding a heavy load-object, and place the load-object on the floor.

In a preferable embodiment, if the speed detection device detects that the leg action portion entered a stopped state, the control device controls the driving device such that the leg action portion maintains the stopped state.

There are cases where, when the worker squats, the worker stops squatting at a midpoint (half-sitting state). According to the present configuration, the control device controls the driving device such that the leg action portion maintains the stopped state, thus making it possible to achieve a state in which the thigh portion of the worker is supported (held) by the leg action portion, and the worker can easily maintain the half-sitting state.

In a preferable embodiment, the assistance device further includes: an angle sensor configured to detect an angle of the leg action portion relative to the main body portion,
wherein if a detection value of the angle sensor changes from an angle corresponding to a worker standing state toward an angle corresponding to a worker squatting state, the control device controls the driving device such that the detection value of the speed detection device gradually increases from a lower speed value than the set value to the set value.

According to this configuration, when the worker squats, the worker starts to squat slowly from the worker standing state, and then squats at an appropriate speed (set value), thereby making it possible to easily and stably squat even when holding a heavy load-object, and place the load-object on the floor.

In a preferable embodiment, the assistance device further includes: an angle sensor configured to detect an angle of the leg action portion relative to the main body portion,
wherein if the detection value of the angle sensor changes from an angle approaching an angle corresponding to a worker squatting state toward an angle corresponding to a worker squatting state, the control device controls the driving device such that the detection value of the speed detection device gradually decreases from the set value to a low speed value.

According to this configuration, when the worker squats, the worker squats at an appropriate speed (set value), and then squats slowly, thereby making it possible to easily and stably squat even when holding a heavy load-object, and place the load-object on the floor.
[3] The following assistance device is proposed as a means for solving the problems corresponding to Problem [3].
   An assistance device including:
   a main body portion capable of being worn by a user;
   a lifting arm that extends from the main body portion to a position forward and upward of the user in a worn state;
   a lifting cord-like body that extends from a leading end portion of the lifting arm; and
   a grip operation tool that is mounted to an extending-side end portion of the cord-like body and is capable of being engaged to and disengaged from a load-object to be lifted,
   wherein the main body portion includes
      a winch configured to wind and unwind the cord-like body,
      a battery configured to supply driving electric power to a driving motor of the winch,
      a control device configured to control operations of the winch, and
      a detection sensor configured to detect a state change of a pre-set detection target item in a drive output system ranging from the battery to the driving motor,
   the control device includes an operation control means for alternatively outputting a steady operation mode in which operation of the winch is controlled in a pre-set steady-state operation mode, and a warning operation mode in which the winch is caused to operate in an operation mode that is different from the steady operation mode, and
   the operation control means outputs a control instruction for the steady operation mode to the winch when a detection value of the state change of the detection target item obtained by the detection sensor is in a predetermined range, and the operation control means switches to and outputs, to the winch, a control instruction for the warning operation mode if the detection value of the state change is outside the predetermined range.

According to this configuration, based on a state change in the detection target item that is set in advance in the drive output system, the operating state of the winch can be switched between the steady operation mode of being controlled in a steady-state operation mode, and a warning operation mode in which the winch is caused to operate in an operation mode that is different from the steady operation mode. In this way, by changing the operation state of the winch itself, even in a noisy work environment, a state change in the pre-set detection target item is easier to quickly know without needing frequent visual checking.

In a preferable embodiment, the detection target item of the detection sensor is a remaining battery amount in the battery,
the operation control means outputs the control instruction for the steady operation mode to the winch if a detection value of the remaining battery amount obtained by the detection sensor is greater than or equal to a predetermined value, and
the operation control means outputs the control instruction for the warning operation mode to the winch if the detection value of the remaining battery amount obtained by the detection sensor is less than the predetermined value.

According to this configuration, the control instruction given to the winch is switched between when the detection value of the remaining battery amount is greater than or equal to the predetermined value and when the detection value of the remaining battery amount is less than the predetermined value. Accordingly, the fact that the remaining battery amount is low is easier to accurately know based on the operation mode of the winch, which corresponds to the extent of the remaining battery amount in the battery.

In a preferable embodiment, the detection target item of the detection sensor is a heat generation temperature in the drive output system ranging from the battery to the driving motor,
the operation control means outputs the control instruction for the steady operation mode to the winch if a detection value of the heat generation temperature obtained by the detection sensor is less than or equal to a predetermined value, and
the operation control means outputs the control instruction for the warning operation mode to the winch if the detection value of the heat generation temperature obtained by the detection sensor exceeds the predetermined value.

According to this configuration, the control instruction given to the winch is switched between when the detection value of the heat generation temperature in the drive output system is less than or equal to the predetermined value and when the detection value of the heat generation temperature in the drive output system exceeds the predetermined value. Accordingly, a state change of the heat generation temperature in the drive output system is easier to accurately know based on the operation mode of the winch, which corresponds to the detection value of the heat generation temperature in the drive output system.

In a preferable embodiment, in the warning operation mode, the operation control means outputs a low-speed operation instruction for reducing a speed of winding of the cord-like body by the winch to a speed lower than a winding speed in the steady operation mode.

According to this configuration, the speed of winding of the cord-like body by the winch in the warning operation mode is set slower than the winding speed in the steady operation mode, thus making it possible to intuitively know the fact that a state change occurred in the detection target item.

In a preferable embodiment, in the warning operation mode, the operation control means outputs an inching operation instruction for intermittently changing a speed of winding of the cord-like body by the winch to a high speed and a low speed.

According to this configuration, an inching operation is performed in which the speed of winding of the cord-like body by the winch in the warning operation mode is intermittently changed between slow and fast, thus making it easier to accurately know the fact that a state change occurred in the detection target item.

In a preferable embodiment, in the warning operation mode, the operation control means outputs a lifting restriction instruction according to which winding of the cord-like body by the winch is stopped, and only lowering of the cord-like body by the winch is permitted.

According to this configuration, in the warning operation mode, the winding of the cord-like body by the winch is stopped, and only lowering of the cord-like body by the winch is permitted, thus making it easier to avoid a situation in which the operation of the winch stops at a midpoint. In other words, if the remaining battery amount is low, only the downward operation that has low power consumption is permitted when driving the winch, and if the heat generation temperature in the drive output system is high, only the downward operation that has a low driving load is performed when driving the winch, thus making it easier to avoid a situation in which the operation of the winch stops at a midpoint.

In a preferable embodiment, the assistance device further includes an attention calling device for announcing an attention item to the user,
wherein in the warning operation mode, an announcing operation is performed by the attention calling device before or at the same time as output of a control instruction to the winch.

According to this configuration, an alert operation is performed by the attention calling device separately from the control instruction in the warning operation mode, thus making it easier to know the fact that the winch operation state is the warning operation mode, more quickly, or more accurately.

Other features and advantages achieved thereby will become apparent by reading the description given below with reference to the accompanying drawings.

### BRIEF DESCRIPTION OF THE DRAWINGS

Fig. 1 is a side view of a state where a worker is wearing an assistance device in a first embodiment (the same follows to Fig. 8).
Fig. 2 is a rear view of the state where the worker is wearing the assistance device.
Fig. 3 is a front view of the state where the worker is wearing the assistance device.
Fig. 4 is an exploded perspective view of a driving device.
Fig. 5 is a longitudinal sectional rear view of the driving device.
Fig. 6 is a diagram showing states of the rotation speed of a rotating body in a winding direction.
Fig. 7 is a diagram showing states of the rotation speed of the rotating body in an unwinding direction.
Fig. 8 is a side view of a state where the worker is wearing an assistance device in a second modified embodiment.
Fig. 9 is a side view of a state where a worker is wearing an assistance device in a second embodiment (the same follows to Fig. 17).
Fig. 10 is a rear view of the state where the worker is wearing the assistance device.
Fig. 11 is a front view of the state where the worker is wearing the assistance device.
Fig. 12 is an exploded perspective view of a wire driving device.
Fig. 13 is a lateral sectional plan view of right and left leg action portions.
Fig. 14 is a diagram showing an operation state of right and left electric motors (right and left leg action portions) in a first state of load-object movement.
Fig. 15 is a diagram showing an operation state of the right and left electric motors (right and left leg action portions) in a second state of load-object movement.
Fig. 16 is a diagram showing an operation state of the right and left electric motors (right and left leg action portions) in the first state of load-object movement in a first modified embodiment.
Fig. 17 is a diagram showing an operation state of the right and left electric motors (right and left leg action portions) in the first state of load-object movement in a second modified embodiment.
Fig. 18 is a side view of an assistive suit as one example of an assistance device in a third embodiment (the same follows to Fig. 25).
Fig. 19 is a rear view of the assistive suit
Fig. 20 is a plan view of the assistive suit
Fig. 21 is a side view of a coupling location between a grip operation tool and wires.
Fig. 22 is a block diagram of a control system.
Fig. 23 is a graph showing winch operation modes.
Fig. 24 is a graph showing winch operation modes in a first modified embodiment.
Fig. 25 is a graph showing winch operation modes in a second modified embodiment.

### EMBODIMENTS OF THE INVENTION

### [FIRST EMBODIMENT]

The following describes a first embodiment.

Unless particularly stated otherwise, "front" and "rear" in the front-rear direction respectively correspond to forward and rearward from the viewpoint of the worker when the worker is wearing an assistance device, and "left" and "right" in the right-left direction respectively correspond to rightward and leftward from the same viewpoint.

### [1]

First, the overall configuration of an assistance device and a main body portion 1 will be described.

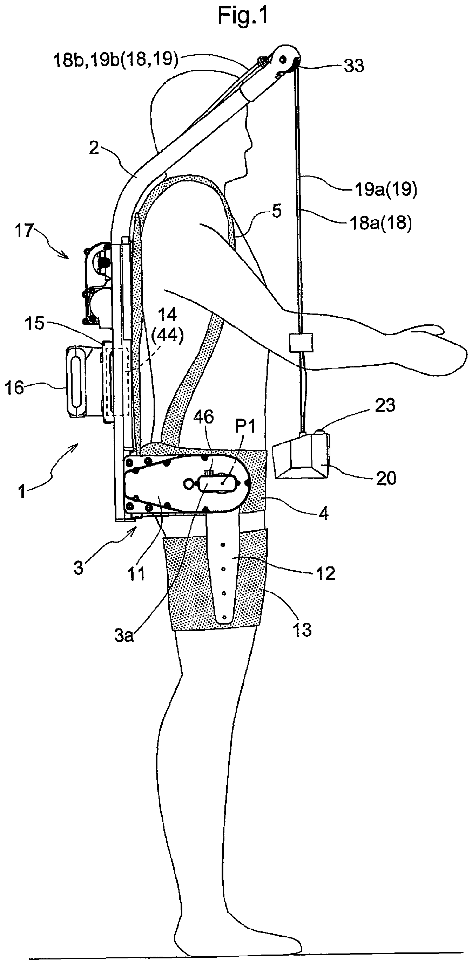

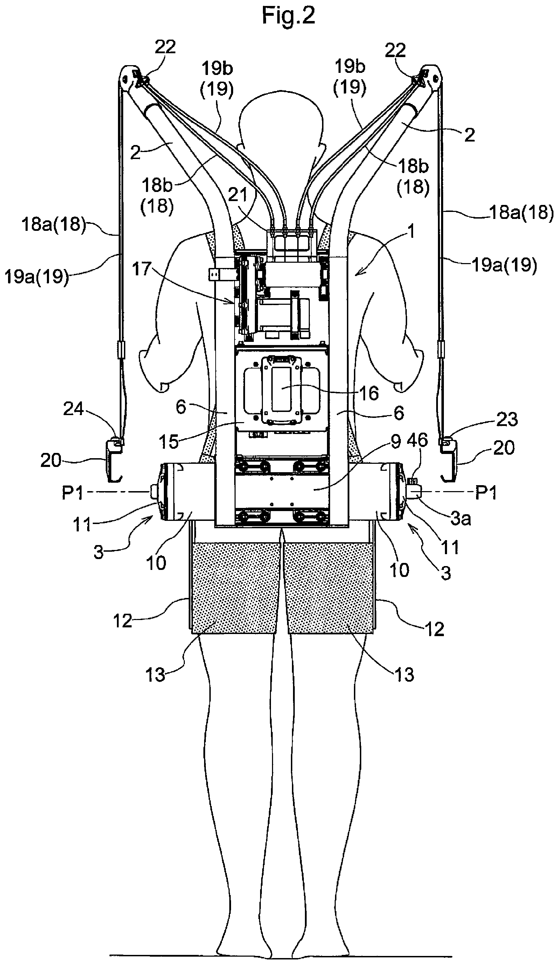

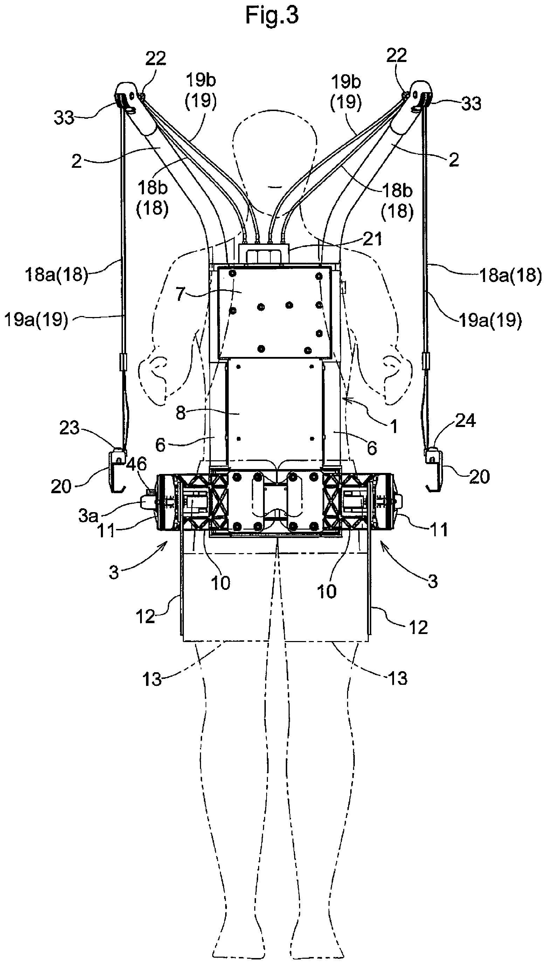

As shown in Figs. 1 to 3, the assistance device includes a main body portion 1 for attachment to the mid back portion of a worker, right and left arm portions 2 that extend upward from an upper portion of the main body portion 1, and right and left leg action portions 3 that are provided on a lower portion of the main body portion 1, and further includes an attachment belt 4 and right and left shoulder belts 5 for being worn by the worker.

As shown in Figs. 1 to 3, the main body portion 1 includes right and left vertical frames 6, support plates 7 and 8 that are coupled to and span between upper portions and intermediate portions of the right and left vertical frames 6, a horizontal frame 9 that is coupled to and spans between lower portions of the right and left vertical frames 6, and the like, and the main body portion 101 has a frame-shaped configuration. The attachment belt 4 is attached to the right and left leg action portions 3, and the right and left shoulder belts 5 are attached to the right and left vertical frames 6. A control device 14 is coupled to the rear face of the support plate 8, and a battery 16 is attached to a support plate 15 that is coupled to the support plate 8 so as to cover the rear side of the control device 14.

Accordingly, as shown in Figs. 1 to 3, the main body portion 1 is attached the mid back portion of the worker by inserting the right and left arm portions (right and left shoulder portions) of the worker into the right and left shoulder belts 5, and wrapping and fixing the attachment belt 4 around the waist portion of the worker.

As shown in Figs. 1 to 3, the weight of the assistance device and a load-object is mainly borne by the waist portion of the worker via the attachment belt 4, and the weight of the assistance device and the load-object is stably supported by the waist portion of the worker. The right and left shoulder belts 5 exhibit a function of mainly preventing a state in which the main body portion 1 becomes separated rearward from the mid back portion of the worker.

### [2]

Next, the right and left leg action portions 3 will be described.

As shown in Figs. 1 to 3, the right and left leg action portions 3 each include a base portion 10, a transmission case 11, an operation arm 12, a leg belt 13, and the like. The base portions 10 are supported by the horizontal frame 9 so as to be capable of sliding in the right-left direction, and the transmission cases 11 are coupled in a forward-facing manner to the outer end portions of the base portions 10.

As shown in Figs. 1 to 3, the operation arms 12 are supported in a front portion of the transmission cases 11 so as to be capable of swinging about a horizontal axis P1 along the right-left direction, and the wide belt-shaped leg belts 13 are coupled to end portions of the operation arms 12. Transmission mechanisms (not shown) configured by multiple flat gears are provided inside the transmission cases 11, electric motors (not shown) extend in the right-left direction inside the base portions 10, and the operation arms 12 are driven to swing about the horizontal axis P1 by the electric motors (not shown) via the transmission mechanisms (not shown).

As described in section [1] above, in the case of attaching the main body portion 1 to the mid back portion of the worker, when the worker wraps and fixes the attachment belt 4 around their waist portion, the right and left leg action portions 3 (base portions 10) can move in the right-left direction along the horizontal frame 9 together with the attachment belt 4.

Accordingly, by adjusting the wrapping of the attachment belt 4 around the waist portion, the space between the right and left leg action portions 3 is set so as to fit the worker's physique, and the positions of the right and left leg action portions 3 are determined by the attachment belt 4.

Thereafter, as shown in Figs. 1 to 3, the worker wraps the leg belts 13 around their thigh portions, and attached the leg belts 13 to their right and left thigh portions with use of hook-and-loop fasteners (not shown) (product name: Magic Tape (registered trademark)).

When the worker is wearing the assistance device, the right leg action portion 3 (transmission case 11) is located on the right side of the waist portion of the worker, and the left leg action portion 3 (transmission case 11) is located on the left side of the waist portion of the worker.

### [3]

Next, the right and left arm portions 2 will be described.

As shown in Figs. 1 to 3, the upper portions of the right and left vertical frames 6 extend diagonally upward beyond the right and left shoulder portions of the worker, and constitute the right and left arm portions 2, and guide pulleys 33 are rotatably supported at upper end portions of the right and left arm portions 2.

As shown in Figs. 1 to 3, a driving device 17 is coupled to the back face of the support plate 7, and two right wires (cables) 18 and 19 and two left wires (cables) 18 and 19 extend from the driving device 17.

Preferably, the right and left wires 18 can each be constituted by a Bowden wire (Bowden cable) that includes an inner wire (inner cable) 18a and an outer wire (outer cable) 18b. Also, the right and left wires 19 can also each be constituted by a Bowden wire that includes an inner wire 19a and an outer wire 19b.

A support member 21 is coupled to an upper portion of the support plate 7, a support member 22 is provided at an upper portion of each of the right and left arm portions 2, outer wires 18b and 19b of the wires 18 and 19 are coupled to the support members 21 and 22, and inner wires 18a and 19a of the wires 18 and 19 are connected to the driving device 17.

As shown in Figs. 1 to 3, the inner wires 18a and 19a of the two right wires 18 and 19 are hung on and extend downward from one of the guide pulleys 33, and a right hand portion 20 is coupled to the inner wires 18a and 19a of the two right wires 18 and 19. The inner wires 18a and 19a of the two left wires 18 and 19 are hung on and extend downward from the other guide pulley 33, and a left hand portion 20 is coupled to the inner wires 18a and 19a of the two left wires 18 and 19.

As shown in Figs. 1 to 3, the right and left hand portions 20 are each constituted by a metallic plate member bent to have the cross-sectional shape of a sharp-cornered "C" (hook shape), and have right-left symmetrical shapes. A push-button type of raising operation switch 23 (corresponding to manual operation portion) is provided in the right hand portion 20, and a push-button type of lowering operation switch 24 (corresponding to manual operation portion) is provided in the left hand portion 20. The raising operation switch 23 and the lowering operation switch 24 are connected to the control device 14 via a harness (not shown).

As described in sections [1] and [2] above, when the assistance device is worn by the worker, the worker grips the right hand portion 20 in their right hand, and grips the left hand portion 20 in their left hand.

In the above-described state, the worker operates the raising operation switch 23 and the lowering operation switch 24 by pressing them with the thumbs on their right and left hands. In this case, the raising operation switch 23 and the lowering operation switch 24 have a self-resetting configuration; when the worker presses the raising operation switch 23 and the lowering operation switch 24, operation signals are output from the raising operation switch 23 and the lowering operation switch 24; and when the worker stops pressing the raising operation switch 23 and the lowering operation switch 24, the output of the operation signals from the raising operation switch 23 and the lowering operation switch 24 stops.

### [4]

Next, the driving device 17 will be described.

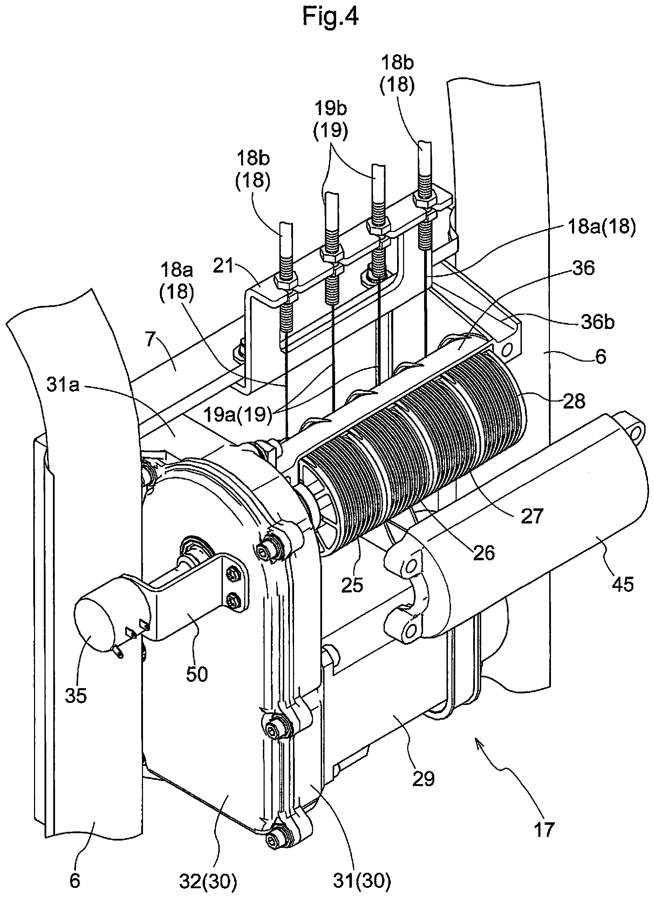

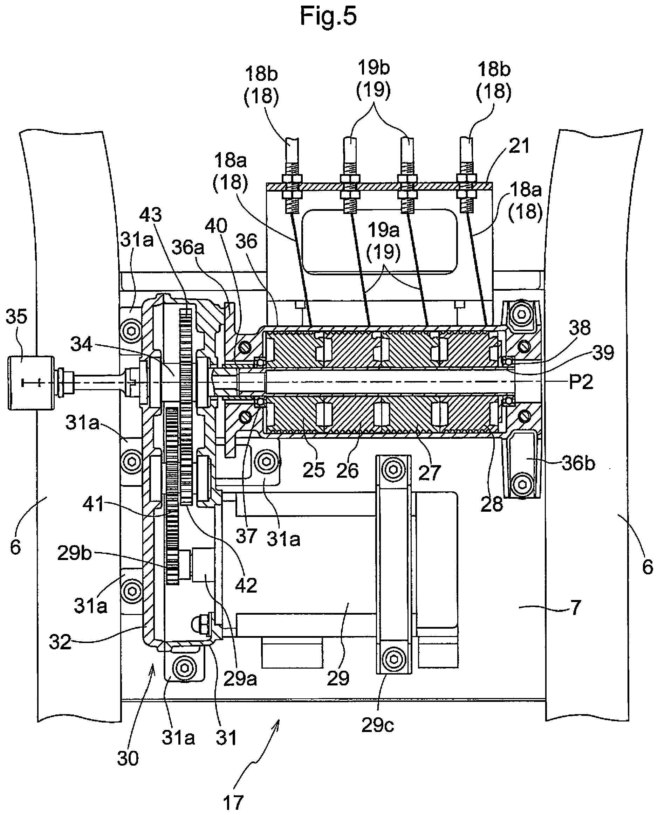

As shown in Figs. 4 and 5, the driving device 17 includes four rotating bodies 25, 26, 27, and 28 that are arranged along the right-left direction and are capable of rotating about a rotation axis P2 along the right-left direction, the electric motor 29 that is arranged extending along the right-left direction below the four rotating bodies 25 to 28, and the transmission mechanism 30 that is arranged extending in the up-down direction and spans the end portion of the electric motor 29 on an output shaft 29a side and a left-side end portion of the rotating bodies 25 to 28 (the end portion on the same side as the output shaft 29a of the electric motor 29).

As shown in Figs. 4 and 5, the transmission mechanism 30 includes a transmission case 31 and a lid portion 32, and leg portions 31a provided on the transmission case 31 are coupled to the support plate 7 using bolts. The end portion of the electric motor 29 on the output shaft 29a side is coupled to a lower portion of the transmission case 31, and leg portions 29c of the electric motor 29 are coupled to the support plate 7 by bolts.

As shown in Fig. 5, a large-diameter first gear 41 and a small-diameter second gear 42 are supported in an intermediate portion in the transmission case 31 and the lid portion 32 so as to be capable of rotating integrally, and an output gear 29b coupled to the output shaft 29a of the electric motor 29 is meshed with the first gear 41.

A transmission shaft 34 is rotatably supported in an upper portion in the transmission case 31 and the lid portion 32, and the transmission shaft 34 projects rightward and leftward from the transmission case 31 and the lid portion 32. A third gear 43 is fixed to the transmission shaft 34, and the third gear 43 is meshed with the second gear 42.

As shown in Figs. 4 and 5, a bracket 50 is coupled to the lid portion 32, an angle sensor 35 (rotary encoder) (corresponding to rotation speed sensor) is coupled to the bracket 50, and the angle sensor 35 is connected to the left-side end portion of the transmission shaft 34.

As shown in Figs. 4 and 5, a semi-cylindrical support member 36 is provided. A semi-circular flange portion 36a is provided on a left-side end portion of the support member 36 (the end portion on the same side as the output shaft 29a of the electric motor 29), and the flange portion 36a is coupled to an upper portion of the transmission case 31. A leg portion 36b is provided on a right-side end portion of the support member 36 (the end portion on the side opposite to the output shaft 29a of the electric motor 29), and the leg portion 36b is coupled to the support plate 7 using bolts.

As shown in Figs. 4 and 5, bearings 37 are supported in the flange portion 36a of the support member 36, and bearings 38 are supported in the leg portion 36b of the support member 36. A drive shaft 39 having a square cross-section is supported by the bearings 37 and 38 so as to be capable of rotating about the rotation axis P2, and the drive shaft 39 and the transmission shaft 34 are coupled by a cylindrical coupling member 40. The rotating bodies 25 to 28 are made of a synthetic resin and are shaped as circular columns, and are each provided with an attachment hole having a square cross-section in the central portion, and the rotating bodies 25 to 28 are attached to the drive shaft 39 by inserting the drive shaft 39 through the attachment holes.

As shown in Figs. 4 and 5, a semi-cylindrical cover member 45 made of a transparent synthetic resin is provided, and the cover member 45 is coupled to the flange portion 36a and the leg portion 36b of the support member 36 using bolts. The bearings 37 and 38 are fixed by the cover member 45, and the outer circumferential surfaces of the rotating bodies 25 to 28 are covered by the support member 36 and the cover member 45.

According to the above structure, motive power from the electric motor 29 is transmitted to the drive shaft 39 via the transmission mechanism 30 (the first gear 41, the second gear 42, and the third gear 43), and the rotating bodies 25 to 28 (the drive shaft 39) are driven to rotate in the winding direction and the unwinding direction.

The electric motor 29 is provided with an electromagnetic brake (not shown). When the electric motor 29 operates, the electromagnetic brake is in the disengaged state, and when the electric motor 29 is stopped or power is not supplied thereto, the electromagnetic brake is in the braking state.

### [5]

Next, the connection of the driving device 17 and the wires 18 and 19 will be described.

As shown in Figs. 4 and 5, the rotating bodies 25 to 28 are made of a synthetic resin and are shaped as circular columns, and the outer circumferential surfaces of the rotating bodies 25 to 28 are provided with one continuous groove portion that extends over the entire width of the outer circumferential surfaces of the rotating bodies 25 to 28 while spiraling (in a male thread shape) multiple times around the outer circumferential surfaces of the rotating bodies 25 to 28.

As shown in Figs. 4 and 5, the inner wires 18a and 19a of the wires 18 and 19 are coupled to the right side faces of the rotating bodies 25 to 28, and end portions of the outer wires 18b and 19b of the wires 18 and 19 are coupled to the support member 21.

According to the above configuration, as shown in Figs. 4 and 5, when the rotating bodies 25 to 28 are driven to rotate in the winding direction, the inner wires 18a and 19a of the wires 18 and 19 successively move along the groove portions in the rotating bodies 25 to 28, the inner wires 18a and 19a of the wires 18 and 19 are wrapped in a spiral manner around the outer circumferential surfaces of the rotating bodies 25 to 28 along the groove portions of the rotating bodies 25 to 28, and thus the inner wires 18a and 19a of the wires 18 and 19 are wound around the rotating bodies 25 to 28 (the right and left hand portions 20 rise).

As shown in Figs. 4 and 5, when the rotating bodies 25 to 28 are driven to rotate in the winding direction until the inner wires 18a and 19a of the wires 18 and 19 have entered all portions of the groove portions of the rotating bodies 25 to 28, the rotating bodies 25 to 28 cannot be further driven to rotate in the winding direction. Accordingly, when the angle sensor 35 detects that the rotating bodies 25 to 28 have been rotated in the winding direction to the extent where the inner wires 18a and 19a of the wires 18 and 19 have entered all portions of the groove portions of the rotating bodies 25 to 28, the electric motor 29 automatically stops.

As shown in Figs. 4 and 5, when the rotating bodies 25 to 28 are driven to rotate in the unwinding direction, the inner wires 18a and 19a of the wires 18 and 19 successively move out of the groove portions of the rotating bodies 25 to 28, and the inner wires 18a and 19a of the wires 18 and 19 are unwound from the rotating bodies 25 to 28 (the right and left hand portions 20 descend).

As shown in Figs. 4 and 5, when the rotating bodies 25 to 28 are driven to rotate in the unwinding direction until the inner wires 18a and 19a of the wires 18 and 19 have moved out of all portions of the groove portions of the rotating bodies 25 to 28, the rotating bodies 25 to 28 cannot be further driven to rotate in the unwinding direction. Accordingly, when the angle sensor 35 detects that the rotating bodies 25 to 28 have been rotated in the unwinding direction to the extent where the inner wires 18a and 19a of the wires 18 and 19 have moved out of all portions of the groove portions of the rotating bodies 25 to 28, the electric motor 29 automatically stops.

### [6]

In the case where a load-object placed on the floor is to be placed on a high shelf or truck bed for example, it is envisioned that the worker squats and places their hands on the load-object on the floor, then rises while holding the load-object with their hands stretched downward, then lifts the load-object up, and places it on the high shelf or truck bed.

The following describes the operation of the right and left leg action portions 3 and the driving device 17 (electric motor 29) under control of the control device 14 based on operations for pressing the raising operation switch 23 and the lowering operation switch 24 in the above-described state.

As shown in Figs. 1 to 3, when the assistance device is worn by the worker, if both the raising operation switch 23 and the lowering operation switch 24 are not pressed by the worker, the driving device 17 is stopped, and the electric motors of the right and left leg action portions 3 are in the stopped state (free rotation state).

Accordingly, if the worker walks or bends their knees to lower their waist portion (squats), the operation arms 12 swing to follow the thigh portions of the worker, and the movement of the worker is not hindered.

Next, in the case where the worker squats and grabs the load-object on the floor, if the worker then presses the lowering operation switch 24, the rotating bodies 25 to 28 are driven to rotate in the unwinding direction by the electric motor 29 (the inner wires 18a and 19a of the wires 18 and 19 are unwound), and the right and left hand portions 20 descend. When the pressing of the lowering operation switch 24 stops, the electric motor 29 stops, and the right and left hand portions 20 stop.

The electric motor 29 is provided with an electromagnetic brake (not shown). When the electric motor 29 operates, the electromagnetic brake is in the disengaged state, and when the electric motor 29 is stopped or power is not supplied thereto, the electromagnetic brake is in the braking state.

Accordingly, while the electric motor 29 is stopped, the inner wires 18a and 19a of the wires 18 and 19 are not unwound, and the right and left hand portions 20 do not descend even if the weight of the load-object is applied to the right and left hand portions 20 as will be described later.

Next, the worker grabs the right (left) hand portion 20 with their right (left) hand and places the right and left hand portions 20 on the load-object, and then the worker lifts the load-object from the floor by standing up. In this state, if the worker presses the raising operation switch 23, the right and left leg action portions 3 (operation arms 12) are driven downward, and the thigh portions of the worker are moved downward, thus assisting the standing-up of the worker.

When the worker stands up as previously described, the right and left hand portions 20 (load-object) do not descend due to the previously-described braking function of the electric motor 29.

As previously described, after the worker has stood up while pressing the raising operation switch 23, if it is detected that the right and left leg action portions 3 (operation arms 12) have reached a position of facing substantially straight downward, it is determined that the worker has completely stood up, and the electric motor of the right and left leg action portions 3 is put in the stopped state (free rotation state).

Next, the rotating bodies 25 to 28 are driven to rotate in the winding direction by the electric motor 29 (the inner wire 18a and 19a of the wires 18 and 19 are wound), and the right and left hand portions 20 (load-object) rise. When the right and left hand portions 20 (load-object) have risen to a desired position, by stopping the pressing of the raising operation switch 23, the electric motor 29 stops, and the right and left hand portions 20 (the load-object) stop.

Next, the worker walks to the high shelf, the truck bed, or the like on which the load-object is to be placed. When the worker arrives at the high shelf, the truck bed, or the like, and then presses the lowering operation switch 24, the rotating bodies 25 to 28 are driven to rotate in the unwinding direction by the electric motor 29 (the inner wires 18a and 19a of the wires 18 and 19 are unwound), and the right and left hand portions 20 (load-object) descend. Accordingly, the load-object is placed on the high shelf, the truck bed, or the like, and the right and left hand portions 20 are detached from the load-object.

As described above, when the load-object is placed on the high shelf, the truck bed, or the like, the initial state is returned to, and similar operations are performed with respect to the next load-object.

### [7]

The following describes a state where the worker presses the raising operation switch 23 in the state in section [6] (the state where the control device 14 controls the electric motor 29 based on the detection results of the angle sensor 35) (part 1).

In the case where the worker presses the raising operation switch 23, and the rotating bodies 25 to 28 are driven to rotate in the winding direction by the electric motor 29, the rotation speed of the rotating bodies 25 to 28 in the winding direction when driven by the control device 14 is detected based on the detection value of the angle sensor 35.

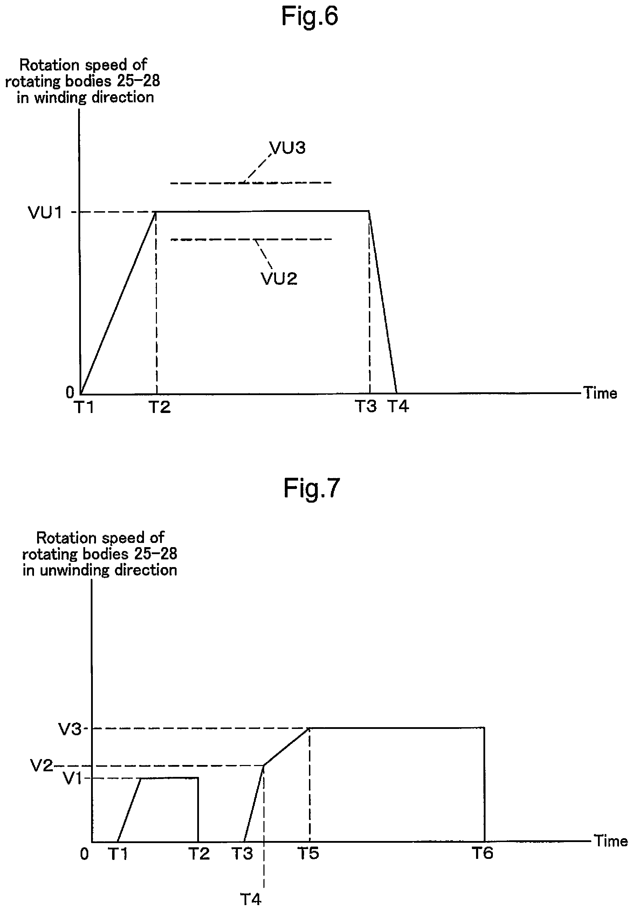

As shown in Fig. 6, based on the rotation speed of the rotating bodies 25 to 28 in the winding direction, the electric motor 29 in the winding direction (the drive force (drive torque) of the electric motor 29 is controlled) such that the rotation speed of the rotating bodies 25 to 28 in the winding direction gradually increases from the stopped state (see time T1).

As shown in Fig. 6, after the rotation speed of the rotating bodies 25 to 28 in the winding direction has gradually increased from the stopped state, when the rotation speed of the rotating bodies 25 to 28 in the winding direction reaches a set rotation speed VU1, the electric motor 29 operates (the drive force (drive torque) of the electric motor 29 is controlled) such that the rotation speed of the rotating bodies 25 to 28 in the winding direction is maintained at the set rotation speed VU1 (see time T2). Thereafter, if the worker is pressing the raising operation switch 23, the rotation speed of the rotating bodies 25 to 28 in the winding direction is maintained at the set rotation speed VU1.

As described above, the rotation speed of the rotating bodies 25 to 28 in the winding direction is maintained at the set rotation speed VU1 regardless of the state where a load-object is not hung on the right and left hand portions 20, or the state where a heavy load-object is hung on the right and left hand portions 20.

As shown in Figs. 1 to 3, a protruding portion 3a is provided on the right leg action portion 3 (transmission case 11), and a set value change switch 46 (corresponds to a set value change portion) is provided facing upward on the upper face of the protruding portion 3a. The set value change switch 46 is configured as a rotatable dial type of switch, and operation signals from the set value change switch 46 are input to the control device 14.

Accordingly, by operating the set value change switch 46, the worker can change the set rotation speed VU1 shown in Fig. 6 to a little slower set rotation speed VU2 or to a little faster set rotation speed VU3.

### [8]

The following describes a state where the worker has pressed the raising operation switch 23 in the state in section [6] (the state where the control device 14 controls the electric motor 29 based on the detection results of the angle sensor 35) (part 2).

In the state described in section [7] above, there is a state where the rotation speed of the rotating bodies 25 to 28 in the winding direction cannot be maintained at the set rotation speed VU1, such as the state where an extremely heavy load-object is hung on the right and left hand portions 20 or the remaining battery amount of the battery 16 is low.

The control device 14 is provided with a load detecting portion 44 in the form of software, and when the electric motor 29 is operated in the winding direction or the unwinding direction, the load detecting portion 44 detects the load that is applied to the electric motor 29 based on the current value, the voltage value, or the like of the electric motor 29.

In the case where the rotation speed of the rotating bodies 25 to 28 in the winding direction cannot be maintained at the set rotation speed VU1 (VU2, VU3) due to a large load being applied to the electric motor 29 as described above, the load detecting portion 44 determines that an overload state exists, the electric motor 29 operates (the drive force (drive torque) of the electric motor 29 is controlled) such that the rotation speed of the rotating bodies 25 to 28 in the winding direction is maintained at a value slower than the set rotation speed VU1 (VU2, VU3), and a warning is given or a buzzer (not shown) is operated.

Next, when the worker stops pressing the raising operation switch 23 (see time T3), the electric motor 29 stops.

In this case, instead of the electric motor 29 stopping at the instant when the worker stopped pressing the raising operation switch 23, after the worker stops pressing the raising operation switch 23 (see time T3), the rotation speed of the rotating bodies 25 to 28 in the winding direction is gradually reduced from the set rotation speed VU1 (VU2, VU3), and then the electric motor 29 stops (see time T4).

As shown in Fig. 6, the rate of reduction of the rotation speed of the rotating bodies 25 to 28 in the winding direction when stopping the electric motor 29 (from time T3 to time T4) is set to a faster rate than the rate of increase in the rotation speed of the rotating bodies 25 to 28 in the winding direction when the electric motor 29 operates (from time T1 to time T2).

Accordingly, when the worker stops pressing the raising operation switch 23, shock when stopping the electric motor 29 is suppressed, while also preventing a large delay in the stopping of the electric motor 29.

### [9]

The following describes a state where the worker presses the lowering operation switch 24 in the state described in section [6] above (the state where the control device 14 controls the electric motor 29 based on detection results from the angle sensor 35 and the load detecting portion 44).

In the case where the worker presses the lowering operation switch 24, and the rotating bodies 25 to 28 are driven to rotate in the unwinding direction by the electric motor 29 (the case where the inner wires 18a and 19a of the wires 18 and 19 are unwound), the control device 14 detects the rotation speed of the rotating bodies 25 to 28 in the unwinding direction based on the detection value of the angle sensor 35.

When a load-object is not hung on the right and left hand portions 20, or when a light load-object is hung on the right and left hand portions 20, the weight acting on the right and left hand portions 20 is small. As shown in Fig. 7, in the case where the worker presses the lowering operation switch 24, and the rotating bodies 25 to 28 are driven to rotate in the unwinding direction (see time T1), if a load-object is not hung on the right and left hand portions 20, or a light load-object is hung on the right and left hand portions 20, the rotation speed of the rotating bodies 25 to 28 in the unwinding direction (the lowering speed of the right and left hand portions 20) does not rise to a high speed.

Accordingly, as shown in Fig. 7, the electric motor 29 continues to drive the rotating bodies 25 to 28 to rotate in the unwinding direction (the rotating bodies 25 to 28 are driven to rotate in the unwinding direction at a low rotation speed V1 that corresponds to the rotation speed of the electric motor 29 in the unwinding direction).

Next, when the worker stops pressing the lowering operation switch 24 (see time T2), the electric motor 29 stops.

When a heavy load-object is hung on the right and left hand portions 20, the weight acting on the right and left hand portions 20 is large.

As shown in Fig. 7, in the case where the worker presses the lowering operation switch 24, and the rotating bodies 25 to 28 are driven to rotate in the unwinding direction (see time T3), if a heavy load-object is hung on the right and left hand portions 20, the rotation speed of the rotating bodies 25 to 28 in the unwinding direction (the lowering speed of the right and left hand portions 20) is raised to a higher speed.

In this case, if the rotation speed of the rotating bodies 25 to 28 in the unwinding direction (the lowering speed of the right and left hand portions 20) rises above a predetermined value V2 (see time T4), the electric motor 29 is switched from operation in the unwinding direction to operation in the winding direction, and a small drive force in the winding direction is generated in the electric motor 29.

Accordingly, the electric motor 29 applies resistance (damping) to the rotation of the rotating bodies 25 to 28 in the unwinding direction (the lowering of the right and left hand portions 20), and the rotation speed of the rotating bodies 25 to 28 in the unwinding direction (the lowering speed of the right and left hand portions 20) is reduced.

Next, as shown in Fig. 7, when the rotation speed of the rotating bodies 25 to 28 in the unwinding direction (the lowering speed of the right and left hand portions 20) reaches a set rotation speed V3 that has been set in advance (see time T5), the small drive force in the winding direction generated by the electric motor 29 is controlled such that the rotation speed of the rotating bodies 25 to 28 in the unwinding direction (the lowering speed of the right and left hand portions 20) is maintained at the set rotation speed V3.

The control device 14 is provided with the load detecting portion 44 in the form of software. When the electric motor 29 is operated in the winding direction or the unwinding direction, the load detecting portion 44 detects the load that is applied to the electric motor 29 based on the current value, the voltage value, or the like of the electric motor 29.

Accordingly, in the state where the worker presses the lowering operation switch 24, and the rotating bodies 25 to 28 are driven to rotate in the unwinding direction (when the right and left hand portions 20 are lowered), when the load-object hung on the right and left hand portions 20 is placed on a shelf or the like, the weight of the load-object no longer acts on the electric motor 29, and the load applied to the electric motor 29 decreases rapidly. When the rapid decrease in the load applied to the electric motor 29 is detected by the load detecting portion 44 in this way, the control device 14 stops the operation of the electric motor (see time T6).

Modified embodiments of the first embodiment

The configuration of the assistance device according the present invention is not limited to the configuration described above. The following are representative examples of modified embodiments that can be applied alone or in combination.

### First modified embodiment

In the case where the worker is to lift a load-object from the floor by standing, the right and left leg action portions 3 (the operation arms 12) are driven downward to move the thigh portions of the worker downward, thus assisting the standing up of the worker as described in section [6] above, and in this case, the drive force (drive torque) of the electric motors of the right and left leg action portions 3 may be controlled similarly to the control of the electric motor 29 described in sections [7] and [8] above.

A rotation speed sensor (not shown) is provided for detecting the rotation speed of the electric motors of the right and left leg action portions 3 (the swinging speed of the right and left leg action portions 3 (the operation arms 12)), and the detection value of the rotation speed sensor is input to the control device 14.

Accordingly, in the case where the right and left leg action portions 3 (the operation arms 12) are driven downward from the stopped state when the worker stands up, the rotation speed of the electric motors of the right and left leg action portions 3 (the swinging speed of the right and left leg action portions 3 (operation arms 12) is gradually increased from the stopped state, and is then maintained at a set rotation speed.

Next, when the right and left leg action portions 3 (the operation arms 12) approach an angle A1 that corresponds to the worker standing state, the rotation speed of the electric motors of the right and left leg action portions 3 (the swinging speed of the right and left leg action portions 3 (operation arms 12)) gradually decreases, and then the electric motors of the right and left leg action portions 3 (the right and left leg action portions 3 (the operation arms 12)) stop.

In this configuration, the set rotation speed of the electric motors of the right and left leg action portions 3 (right and left leg action portions 3 (the operation arms 12)) can be changed to a faster or slower speed by a manual operation type of set value change portion.

In this case, a configuration is possible in which the set rotation speed of the electric motor of the right leg action portion 3 (right leg action portion 3 (operation arm 12)) and the set rotation speed of the electric motor of the left leg action portion 3 (left leg action portion 3 (operation arm 12)) can be changed to a faster or slower speed independently of each other.

### Second modified embodiment

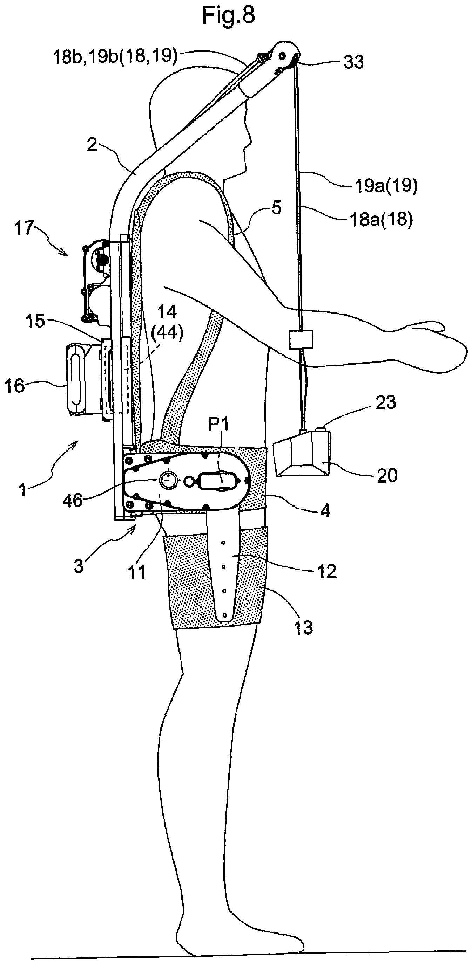

As shown in Fig. 8, a configuration is possible in which the set value change switch 46 is provided on a lateral face of the right leg action portion 3 (transmission case 11).

### Third modified embodiment

The set value change switch 46 may be provided on the left leg action portion 3 (transmission case 11).

### Fourth modified embodiment

A configuration is possible in which the right and left leg action portions 3 are not provided.

In the case of not providing the right and left leg action portions 3 as described above, a configuration is possible in which an arm-shaped support member (not shown) extends from the main body portion 1 to a position rightward (leftward) of the waist portion of the worker, and the set value change switch 46 is provided on that support member.

### Fifth modified embodiment

As shown in Fig. 7, instead of controlling the small drive force of the electric motor 29 in the winding direction such that the rotation speed of the rotating bodies 25 to 28 in the unwinding direction (the lowering speed of the right and left hand portions 20) is maintained at the set rotation speed V3, a configuration is possible in which, when the rotation speed of the rotating bodies 25 to 28 in the unwinding direction (the lowering speed of the right and left hand portions 20) rises above the predetermined value V2 (see time T4), a constant small drive force (constant resistance) (constant damping) in the winding direction is generated in the electric motor 29.

According to this configuration, in the state where a constant small drive force (constant resistance) (constant damping) in the winding direction is generated in the electric motor 29, the rotation speed of the rotating bodies 25 to 28 in the unwinding direction (the lowering speed of the right and left hand portions 20) changes a small amount according to the weight of the load-object that is hung on the right and left hand portions 20.

### Sixth modified embodiment

The predetermined value V2 and the set rotation speed V3 shown in Fig. 7 may be set to the same value.

According to this configuration, in the state where the worker presses the lowering operation switch 24, the rotating bodies 25 to 28 are driven to rotate in the unwinding direction, and the rotation speed of the rotating bodies 25 to 28 in the unwinding direction (the lowering speed of the right and left hand portions 20) is accelerated to a higher speed, when the rotation speed of the rotating bodies 25 to 28 in the unwinding direction (the lowering speed of the right and left hand portions 20) reaches the set rotation speed V3 (predetermined value), the small drive force of the electric motor 29 in the winding direction is controlled such that the rotation speed of the rotating bodies 25 to 28 in the unwinding direction (the lowering speed of the right and left hand portions 20) is immediately maintained at the set rotation speed V3.

### Seventh modified embodiment

A configuration is possible in which a manually operable operation switch or the like is use to allow manual adjustment of the predetermined value V2 and the set rotation speed V3 to a higher or lower value.

For example, a configuration is possible in which a manually operable operation switch or the like is use to allow manual adjustment of the predetermined value V2 to a higher or lower value in the fifth modified embodiment described above.

Alternatively, a configuration is possible in which a manually operable operation switch or the like is use to allow manual adjustment of the set rotation speed V3 (predetermined value) to a higher or lower value in the sixth modified embodiment described above.

### Eighth modified embodiment

A configuration is possible in which the right and left hand portions 20 are each provided with an existence sensor (not shown) that detects whether or not a load-object hung on the right and left hand portions 20 shown in Figs. 1 to 3 exists, and the electromagnetic brake of the electric motor 29 is operated in the canceled state (or light damping state) when a load-object is not hung on the right and left hand portions 20.

Accordingly, in the state where a load-object is not hung on the right and left hand portions 20 for example, if the right and left hand portions 20 are located in the vicinity of the guide pulleys 33 of the right and left arm portions 2, the worker can grab move the right (left) hand portion 20 downward with their right hand (left hand) (can unwind the inner wires 18a and 19a of the wires 18 and 19 from the driving device 17) without pressing the lowering operation switch 24.

### Ninth modified embodiment

A configuration is possible in which one wire 18 and one rotating body 25 are provided with respect to the right hand portion 20 shown in Figs. 1 to 3, and one wire 18 and one rotating body 28 are provided with respect to the left hand portion 20.

### Tenth modified embodiment

A configuration is possible in which the right and left arm portions 2 are omitted, and one arm portion 2 is provided.

In the case of the above configuration, two wires 18 extend from the one arm portion 1, the right hand portion 20 is provided on one of the two wires 18, and the left hand portion 20 is provided on the other one of the two wires 18.

Also, one wire 18 extends from one arm portion 2, the end portion of the one wire 18 is branched into two branches, the right hand portion 20 is provided on one of the branch portions, and the left hand portion 20 is provided on the other branch portion.

### Eleventh modified embodiment

A configuration is possible in which the right and left leg action portions 3 are not provided. A configuration is possible in which the battery 16 is attached to the rear face of the horizontal frame 9 instead of the support plate 15.

### [SECOND EMBODIMENT]

The following describes a second embodiment.

Unless particularly stated otherwise, "front" and "rear" in the front-rear direction respectively correspond to forward and rearward from the viewpoint of the worker when the worker is wearing an assistance device, and "left" and "right" in the right-left direction respectively correspond to rightward and leftward from the same viewpoint.

### [1]

The following describes the overall configuration of an assistance device and a main body portion 1.

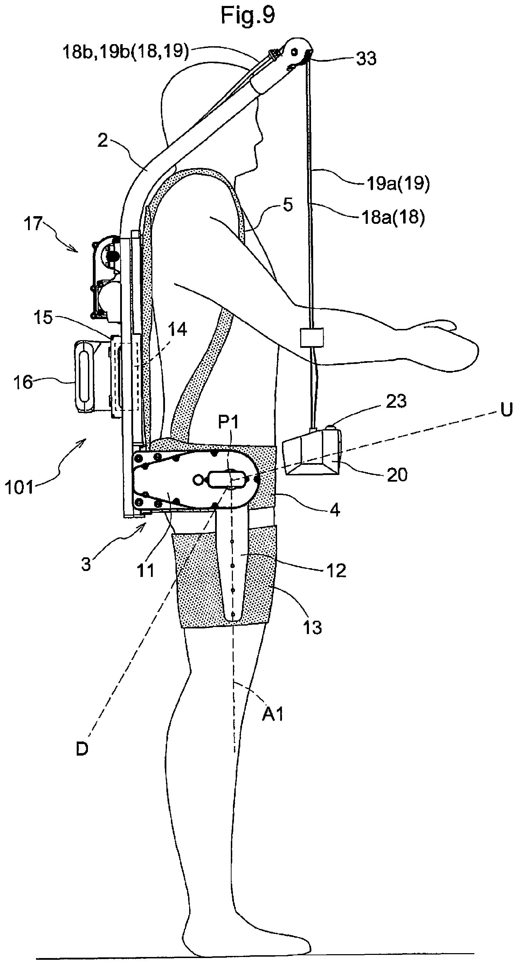

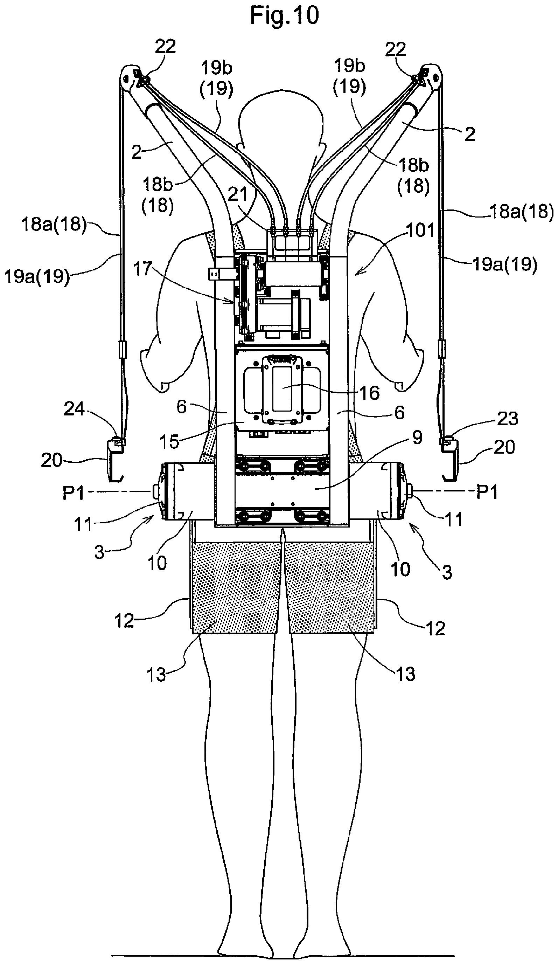

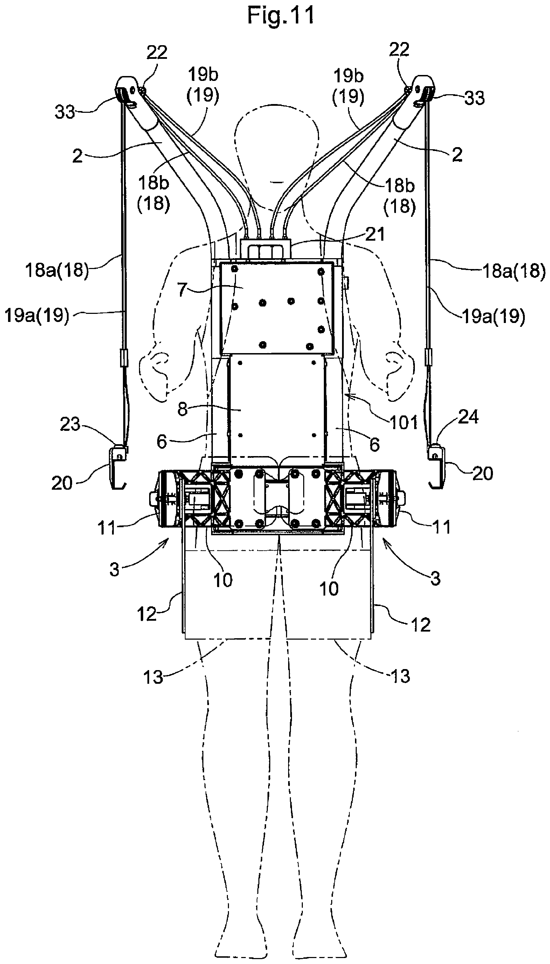

As shown in Figs. 9 to 11, the assistance device includes a main body portion 101 for attachment to the mid back portion of a worker, right and left arm portions 2 that extend upward from an upper portion of the main body portion 101, and right and left leg action portions 3 that are provided on a lower portion of the main body portion 101, and further includes an attachment belt 4 and right and left shoulder belts 5 for being worn by the worker.

As shown in Figs. 9 to 11, the main body portion 101 includes right and left vertical frames 6, support plates 7 and 8 that are coupled to and span between upper portions and intermediate portions of the right and left vertical frames 6, a horizontal frame 9 that is coupled to and spans between lower portions of the right and left vertical frames 6, and the like, and the main body portion 101 has a frame-shaped configuration. The attachment belt 4 is attached to the right and left leg action portions 3, and the right and left shoulder belts 5 are attached to the right and left vertical frames 6. A control device 14 is coupled to the rear face of the support plate 8, and a battery 16 is attached to a support plate 15 that is coupled to the support plate 8 so as to cover the rear side of the control device 14.

Accordingly, as shown in Figs. 9 to 11, the main body portion 101 is attached the mid back portion of the worker by inserting the right and left arm portions (right and left shoulder portions) of the worker into the right and left shoulder belts 5, and wrapping and fixing the attachment belt 4 around the waist portion of the worker.

As shown in Figs. 9 to 11, the weight of the assistance device and a load-object is mainly borne by the waist portion of the worker via the attachment belt 4, and the weight of the assistance device and the load-object is stably supported by the waist portion of the worker. The right and left shoulder belts 5 exhibit a function of mainly preventing a state in which the main body portion 101 becomes separated rearward from the mid back portion of the worker.

### [2]

Next, the right and left leg action portions 3 will be described.

As shown in Figs. 9 to 11, the right and left leg action portions 3 each include a base portion 10, a transmission case 11, an operation arm 12, a leg belt 13, and the like. The base portions 10 are supported by the horizontal frame 9 so as to be capable of sliding in the right-left direction, and the transmission cases 11 are coupled in a forward-facing manner to the outer end portions of the base portions 10. The operation arms 12 are supported in a front portion of the transmission cases 11 so as to be capable of swinging about a horizontal axis PI along the right-left direction, and the wide belt-shaped leg belts 13 are coupled to end portions of the operation arms 12.

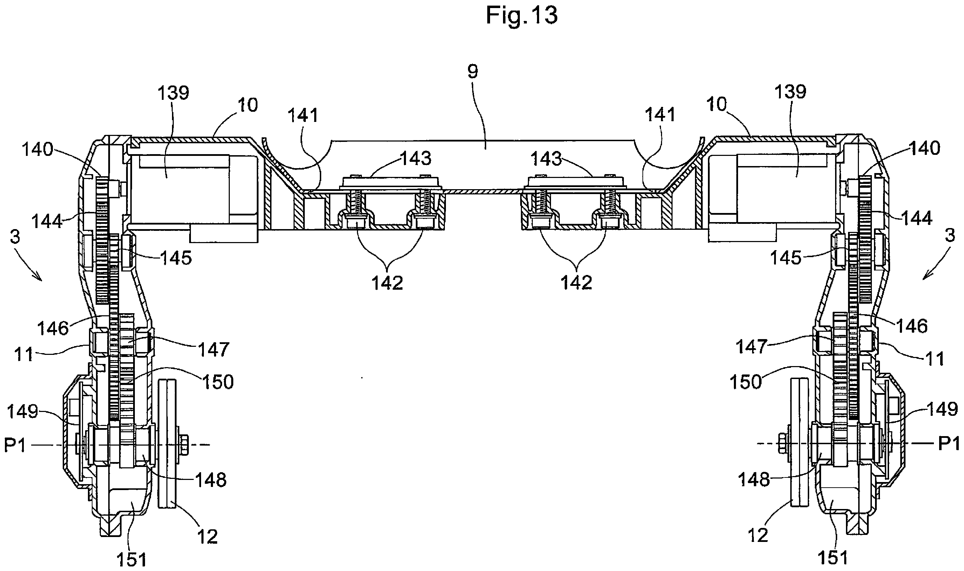

As shown in Fig. 13, right and left electric motors 139 (corresponding to right and left driving devices) are supported laterally on the right and left base portions 10. The transmission case 11 is provided with transmission gears 144 and 145 that are coupled to each other and transmission gears 146 and 147 that are coupled to each other, the transmission gears 145 and 146 are meshed with each other, and the output gear 140 of the electric motor 139 and the transmission gear 144 are meshed with each other. A fan-shaped semi-circular gear 150 is coupled to a support shaft 148 that supports the operation arm 12, and the semi-circular gear 150 and the transmission gear 147 are meshed with each other.

According to the above structure, the operation arm 12 is driven to swing about the horizontal axis P1 by the electric motor 139.

As shown in Fig. 13, elongated holes 141 that extend in the right-left direction are formed in the horizontal frame 9, bolts 142 attached to the base portions 10 are inserted into the elongated holes 141 of the horizontal frame 9, and the support members 143 are attached to the bolts 142. Accordingly, the base portions 10 are supported by the horizontal frame 9 in a manner of being capable of sliding in the right-left direction.

As described in section [1] above, in the case of attaching the main body portion 101 to the mid back portion of the worker, when the worker wraps and fixes the attachment belt 4 around their waist portion, the right and left leg action portions 3 (base portions 10) can move in the right-left direction along the horizontal frame 9 together with the attachment belt 4.

Accordingly, by adjusting the wrapping of the attachment belt 4 around the waist portion, the space between the right and left leg action portions 3 is set so as to fit the worker's physique, and the positions of the right and left leg action portions 3 are determined by the attachment belt 4.

Thereafter, as shown in Figs. 9 to 11, the worker wraps the leg belts 13 around their right and left thigh portions, and fixes the leg belts 13 to their right and left thigh portions with use of hook-and-loop fasteners (not shown) (product name: Magic Tape (registered trademark)).

### [3]

Next, the right and left arm portions 2 will be described.

As shown in Figs. 9 to 11, the upper portions of the right and left vertical frames 6 extend diagonally upward beyond the right and left shoulder portions of the worker, and constitute the right and left arm portions 2, and guide pulleys 33 are rotatably supported at upper end portions of the right and left arm portions 2.

As shown in Figs. 9 to 11, a wire driving device (hereinafter, driving device 17) is coupled to the back face of the support plate 7, and two right wires (cables) 18 and 19 and two left wires 18 and 19 extend from the driving device 17.

Preferably, the right and left wires 18 can each be constituted by a Bowden wire (Bowden cable) that includes an inner wire (inner cable) 18a and an outer wire (outer cable) 18b. Also, the right and left wires 19 can also each be constituted by a Bowden wire that includes an inner wire 19a and an outer wire 19b.

A support member 21 is coupled to an upper portion of the support plate 7, a support member 22 is provided at an upper portion of each of the right and left arm portions 2, outer wires 18b and 19b of the wires 18 and 19 are coupled to the support members 21 and 22, and inner wires 18a and 19a of the wires 18 and 19 are connected to the driving device 17.

As shown in Figs. 9 to 11, the inner wires 18a and 19a of the two right wires 18 and 19 are hung on and extend downward from one of the guide pulleys 33, and a right hand portion 20 is coupled to the inner wires 18a and 19a of the two right wires 18 and 19. The inner wires 18a and 19a of the two left wires 18 and 19 are hung on and extend downward from the other guide pulley 33, and a left hand portion 20 is coupled to the inner wires 18a and 19a of the two left wires 18 and 19.

As shown in Figs. 9 to 11, the right and left hand portions 20 are each constituted by a metallic plate member bent to have the cross-sectional shape of a sharp-cornered "C" (hook shape), and have right-left symmetrical shapes. A push-button type of raising operation switch 23 (corresponding to a manual operation portion) is provided in the right hand portion 20, and a push-button type of lowering operation switch 24 is provided in the left hand portion 20. The raising operation switch 23 and the lowering operation switch 24 are connected to the control device 14 via a harness (not shown).

As described in sections [1] and [2] above, when the assistance device is worn by the worker, the worker grips the right hand portion 20 in their right hand, and grips the left hand portion 20 in their left hand.

In the above-described state, the worker operates the raising operation switch 23 and the lowering operation switch 24 by pressing them with the thumbs on their right and left hands. In this case, the raising operation switch 23 and the lowering operation switch 24 have a self-resetting configuration, when the worker presses the raising operation switch 23 and the lowering operation switch 24, signals are output from the raising operation switch 23 and the lowering operation switch 24, and when the worker stops pressing the raising operation switch 23 and the lowering operation switch 24, the output of the signals from the raising operation switch 23 and the lowering operation switch 24 stops.

### [4]

Next, the driving device 17 will be described.

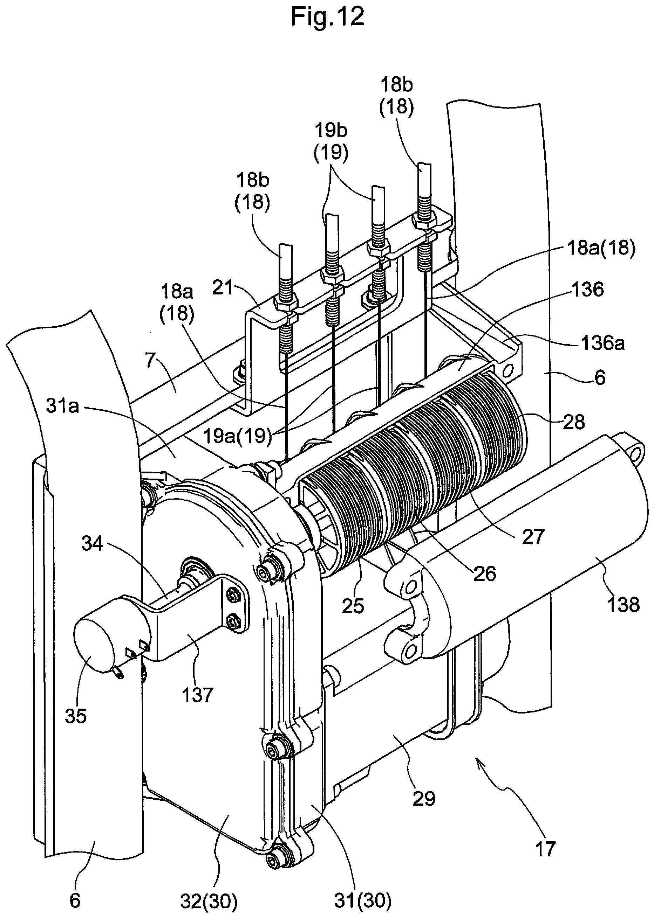

As shown in Fig. 12, the driving device 17 includes four rotating bodies 25, 26, 27, and 28 that are arranged along the right-left direction and are capable of rotating about a rotation axis along the right-left direction, the electric motor 29 that is arranged extending along the right-left direction below the four rotating bodies 25 to 28, and the transmission mechanism 30 that is arranged extending in the up-down direction and spans between the end portion of the electric motor 29 on an output shaft side and a left-side end portion of the rotating bodies 25 to 28 (the end portion on the same side as the output shaft of the electric motor 29).

As shown in Fig. 12, the transmission mechanism 30 includes a transmission case 31 and a lid portion 32, and leg portions 31a provided on the transmission case 31 are coupled to the support plate 7 using bolts. The end portion of the electric motor 29 on the output shaft side is coupled to a lower portion of the transmission case 31, and leg portions of the electric motor 29 are coupled to the support plate 7 by bolts. In this way, by coupling the electric motor 29 to the transmission mechanism 30, the electric motor 29 is in a state of being coupled to the main body portion 101 via the transmission mechanism 30.

As shown in Fig. 12, a transmission shaft 34 is rotatably supported in an upper portion in the transmission case 31 and the lid portion 32, and the transmission shaft 34 projects rightward and leftward from the transmission case 31 and the lid portion 32. Inside the transmission case 31, a gear mechanism (not shown) constituted by multiple flat gears (not shown) is provided spanning between the output shaft of the electric motor 29 and the transmission shaft 34, and the transmission shaft 34 is driven to rotate by the electric motor 29. A bracket 137 is coupled to the lid portion 32, an angle sensor 35 (rotary encoder) is coupled to the bracket 137, and the angle sensor 35 is connected to the left-side end portion of the transmission shaft 34.

As shown in Fig. 12, a semi-cylindrical support member 136 is provided, the left-side end portion of the support member 136 is coupled to the upper portion of the transmission case 31, and a right leg portion 136a of the support member 136 is coupled to the support plate 7 using bolts. A drive shaft (not shown) is supported by the support member 136 so as to be capable of rotating about a rotation axis along the right-left direction, this drive shaft is coupled to the transmission shaft 34, and the rotating bodies 25 to 28 are attached to the drive shaft. A semi-cylindrical cover member 138 made of a transparent synthetic resin is provided, and the cover member 138 is coupled to the support member 136 using bolts.

As shown in Fig. 12, the inner wire 18a of the left wire 18 is connected to the rotating body 25, and the inner wire 19a of the left wire 19 is connected to the rotating body 26. The inner wire 19a of the right wire 19 is connected to the rotating body 27, and the inner wire 18a of the right wire 18 is connected to the rotating body 28.

As shown in Figs. 9 and 12, when the rotating bodies 25 to 28 are driven to rotate in the winding direction by the electric motor 29, the inner wires 18a and 19a of the right and left wires 18 and 19 are wound onto the rotating bodies 25 to 28, and the right and left hand portions 20 rise.

When the rotating bodies 25 to 28 are driven to rotate in the unwinding direction by the electric motor 29, the inner wires 18a and 19a of the right and left wires 18 and 19 are unwound from the rotating bodies 25 to 28, and the right and left hand portions 20 descend.

The electric motor 29 is provided with an electromagnetic brake (not shown). When the electric motor 29 operates, the electromagnetic brake is in the disengaged state, and when the electric motor 29 is stopped or power is not supplied thereto, the electromagnetic brake is in the braking state.

### [5]

In the case where a load-object placed on the floor is to be placed on a high shelf or truck bed for example, it is envisioned that the worker squats and places their hands on the load-object on the floor, then rises while holding the load-object with their hands stretched downward, then lifts the load-object up, and places it on the high shelf or truck bed (first state of load-object movement).

For example, in the case where a load-object placed on a high shelf or a truck bed is to be placed on the floor, a case can be envisioned in which the worker stands up, grabs the load-object placed on the high shelf or the truck bed, then squats while holding the load-object, extends their arms to lower the load-object, and places the load-object on the floor (second state of load-object movement).

As shown in Fig. 13, right and left angle sensors 149 (corresponding to speed detection devices) are provided in the right and left transmission cases 11, and the angle sensors 149 are connected to the support shafts 148. Accordingly, it is possible to detect the angles of the right and left leg action portions 3 (the operation arms 12) relative to the main body portion 101 (the transmission cases 11), and it is possible to detect the movement speeds of the right and left leg action portions 3 (the operation arms 12).

As shown in Fig. 13, a stopper 151 is provided inside each of the transmission cases 11, and the rotation range of the semi-circular gear 150 is determined by the one end portion and the other end portion of the semi-circular gear 150 abutting against the stopper 151.

In this case, as shown in Fig. 9, the semi-circular gear 150 rotates (the operation arm 12 swings) in a range having an upper limit angle U at which the operation arm 12 faces diagonally upward relative to the transmission case 11, and a lower limit angle D at which the operation arm 12 faces diagonally downward on the rear side relative to the transmission case 11.

In the above-described first state of load-object movement and second state of load-object movement, the control device 14 controls the right and left leg action portions 3 separately and independently based on the pressing operations performed on the raising operation switch 23 and the lowering operation switch 24 and detection values of the right and left angle sensors 149, and the states of control of the driving device 17 will be described in sections [6] to [9] below.

### [6]

The following describes the first state of load-object movement mentioned in section [5] above.

As shown in Figs. 9 to 11, when the assistance device is worn by the worker, if both the raising operation switch 23 and the lowering operation switch 24 are not pressed by the worker, the driving device 17 is stopped, and the electric motors 139 are in the stopped state (free rotation state). Accordingly, if the worker walks, the right and left operation arms 12 swing to follow the right and left thigh portions of the worker, and the movement of the worker is not hindered.

Next, in the case where the worker squats and grabs the load-object on the floor, if the worker then presses the lowering operation switch 24, the inner wires 18a and 19a of the wires 18 and 19 are unwound from the driving device 17, and the right and left hand portions 20 descend. When the pressing of the lowering operation switch 24 stops, the driving device 17 stops, and the right and left hand portions 20 stop.

As described in section [4] above, the driving device 17 is provided with a braking function (electromagnetic brake of electric motor 29). Accordingly, while the driving device 17 is stopped, the inner wires 18a and 19a of the wires 18 and 19 are not unwound from the driving device 17, and the right and left hand portions 20 do not descend even if the weight of the load-object is applied to the right and left hand portions 20 as will be described later.

Next, the worker grabs the right (left) hand portion 20 with their right (left) hand and places the right and left hand portions 20 on the load-object, and then the worker lifts the load-object from the floor by standing up. In this state, if the worker presses the raising operation switch 23, the right and left leg action portions 3 (operation arms 12) are driven downward, and the right and left thigh portions of the worker are moved downward, thus assisting the standing-up of the worker.

When the worker stands up as previously described, the right and left hand portions 20 (the load-object) do not descend due to the braking function of the driving device 17 (the electromagnetic brake of the electric motor 29).

As previously described, after the worker stands up while pressing the raising operation switch 23, when the detection values of the right and left angle sensors 149 reach an angle A1 that corresponds to the worker standing state (the state where the transmission cases 11 and the operation arms 12 are approximately orthogonal to each other), the electric motors 139 enter the stopped state (free rotation state).

Next, the driving device 17 operates, the inner wires 18a and 19a of the wires 18 and 19 are wound by the driving device 17, and the right and left hand portions 20 (the load-object) rise. When the right and left hand portions 20 (the load-object) have risen to a desired position, by stopping the pressing of the raising operation switch 23, the driving device 17 stops, and the right and left hand portions 20 (the load-object) stop.

Next, the worker walks to the high shelf, the truck bed, or the like on which the load-object is to be placed. When the worker arrives at the high shelf, the truck bed, or the like, the worker presses the lowering operation switch 24, the right and left hand portions 20 (the load-object) are lowered, the load-object is placed on the high shelf, the truck bed, or the like, and then the right and left hand portions 20 are separated from the load-object.

As described above, when the load-object is placed on the high shelf, the truck bed, or the like, the initial state is returned to, and similar operations are performed with respect to the next load-object.

### [7]

The following describes the state where the right and left leg action portions 3 (the operation arms 12) are driven downward when the worker stands up in the first state of load-object movement mentioned in section [6] above.

In the state where the worker grabs the right (left) hand portion 20 with their right hand (left hand), and engages the right and left hand portions 20 with the load-object, if the worker presses the raising operation switch 23, the angles of the operation arms 12 in the right and left leg action portions 3 are detected by the right and left angle sensors 149.

It is assumed that when the worker presses the raising operation switch 23, the right left is positioned on the forward side, and the left leg is positioned on the rearward side (the detection value of the right angle sensor 149 is closer to the upper limit angle U than the detection value of the left angle sensor 149 is).

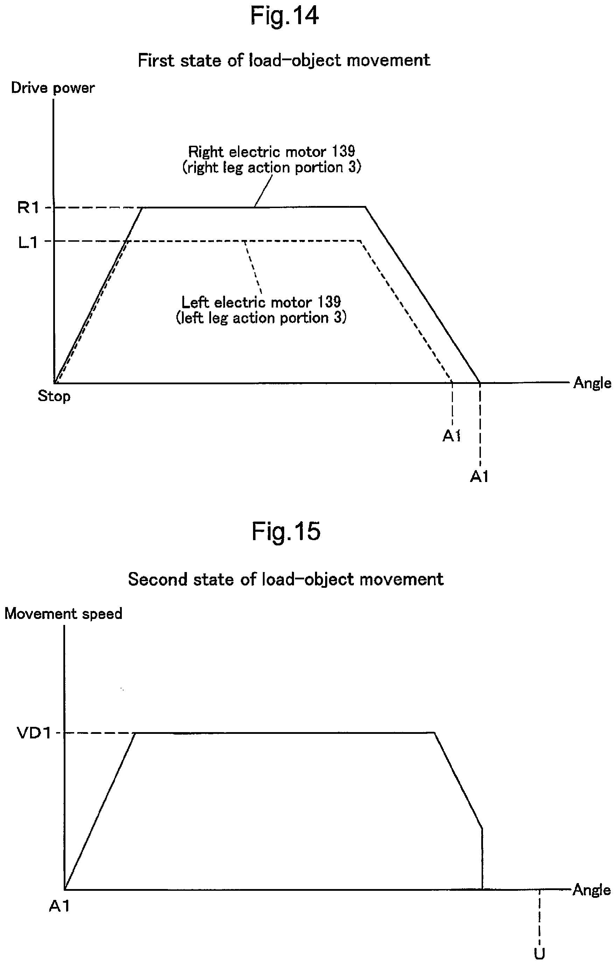

When the worker presses the raising operation switch 23 in the above-described state, as shown in Fig. 14, the drive force (torque) generated by the right and left electric motors 139 gradually increases from the stopped state (free rotation state).

As shown in Fig. 14, at the same time as the drive force (torque) generated by the right and left electric motors 139 gradually increases from the stopped state (free rotation state), a right set value R1 and a left set value L1 are set.

In this case, when the worker has pressed the raising operation switch 23, if the detection value of the right angle sensor 149 is closer to the upper limit angle U than the detection value of the left angle sensor 149 is, the right set value R1 is set to a value that is larger than the left set value L1. Conversely, when the worker has pressed the raising operation switch 23, if the detection value of the left angle sensor 149 is closer to the upper limit angle U than the detection value of the right angle sensor 149 is, the left set value L1 is set to a value that is larger than the right set value R1.

As shown in Fig. 14, after the drive force (torque) generated by the right and left electric motors 139 has gradually risen, when the drive force (torque) generated by the right electric motor 139 reaches the right set value R1, the drive force (torque) generated by the right electric motor 139 is maintained at the right set value R1. When the drive force (torque) generated by the left electric motor 139 reaches the left set value L1, the drive force (torque) generated by the left electric motor 139 is maintained at the left set value L1.

As shown in Fig. 14, when the detection value of the right (left) angle sensor 149 reaches a value close to the angle A1 that corresponds to the worker standing state, the drive force (torque) generated by the right (left) electric motor 139 gradually decreases from the right set value R1 (left set value L1). Next, when the detection value of the right (left) angle sensor 149 reaches the angle A1 corresponding to the worker standing state, the right (left) electric motor 139 enters the stopped state (free rotation state).

In this case, as shown in Fig. 14, when the detection value of the left angle sensor 149 reaches the angle A1 corresponding to the worker standing state for example, the left electric motor 139 enters the stopped state (free rotation state) first, and then when the detection value of the right angle sensor 149 reaches the angle A1 corresponding to the worker standing state, the right electric motor 139 enters the stopped state (free rotation state). In the above-described state, there are also cases where the right electric motor 139 enters the stopped state (free rotation state) first, and then the left electric motor 139 enters the stopped state (free rotation state).

### [8]

The following describes the second state of load-object movement mentioned in section [5] above.

As shown in Figs. 9 to 11, when the assistance device is worn by the worker, if both the raising operation switch 23 and the lowering operation switch 24 are not pressed by the worker, the driving device 17 is stopped, and the electric motors 139 of the right and left leg action portions 3 are in the stopped state (free rotation state). Accordingly, if the worker walks, the right and left operation arms 12 swing to follow the thigh portions of the worker, and the movement of the worker is not hindered.

Next, in the case where the worker grabs the load-object places on the high shelf or the truck bed, if the worker then presses the raising operation switch 23, the inner wires 18a and 19a of the wires 18 and 19 are wound by the driving device 17, and the right and left hand portions 20 rise. When the pressing of the raising operation switch 23 stops, the driving device 17 stops, and the right and left hand portions 20 stop.

As described in section [4] above, the driving device 17 is provided with a braking function (electromagnetic brake of electric motor 29). Accordingly, while the driving device 17 is stopped, the inner wires 18a and 19a of the wires 18 and 19 are not unwound from the driving device 17, and the right and left hand portions 20 do not descend even if the weight of the load-object is applied to the right and left hand portions 20 as will be described later.

Next, the worker grabs the right (left) hand portion 20 with their right (left) hand and engages the right and left hand portions 20 with the load-object. In this state, the worker presses the raising operation switch 23 and then stops pressing the raising operation switch 23, and thus the inner wires 18a and 19a of the wires 18 and 19 are wound a small amount by the driving device 17, and the right and left hand portions 20 rise a small amount, thereby making it possible to lift the load-object from the high shelf or the truck bed by a small amount.

Next, the worker moves to the location where the load-object is to be placed. When the worker reaches the location where the load-object is to be placed, the worker squats while pressing the lowering operation switch 24.

In this case, when the worker squats, the right and left leg action portions 3 (the operation arms 12) apply resistance to the right and left thigh portions of the worker (resistance against the upward movement of the right and left leg action portions 3 (the operation arms 12) is generated) such that by suppressing sudden rising of the right and left thigh portions of the worker, the right and left thigh portions of the worker rise gradually, and the worker can squat slowly.

Next, the driving device 17 operates, the inner wires 18a and 19a of the wires 18 and 19 are unwound from the driving device 17, and the right and left hand portions 20 (load-object) descend. When the right and left hand portions 20 (load-object) have descended to a desired position, by stopping the pressing of the lowering operation switch 24, the driving device 17 stops, and the right and left hand portions 20 (the load-object) stop, and then the worker places the load-object on the floor, and disengages the right and left hand portions 20 from the load-object.

As described above, when the load-object is placed on the floor, the initial state is returned to, and similar operations are performed with respect to the next load-object.

### [9]

The following describes the suppression of sudden rising of the right and left thigh portions of the worker when the worker squats in the second state of load-object movement mentioned in section [8] above.

In the state where the worker grabs the right (left) hand portion 20 with their right hand (left hand), and engages the right and left hand portions 20 with the load-object, if the worker presses the lowering operation switch 24, the detection values of the right and left angle sensors 149 reach angles at or near the angle A1 corresponding to the worker standing state.

In the above-described state, when the worker squats while pressing the lowering operation switch 24, the right and left leg action portions 3 (the operation arms 12) move upward along with the rising of the right and left thigh portions of the worker.

As previously described, when the right and left leg action portions 3 (the operation arms 12) start to move upward, the upward movement speed of the right and left leg action portions 3 (the operation arms 12) is detected based on the detection values of the right and left angle sensors 149. At the same time as this, as shown in Fig. 15, when the right and left leg action portions 3 (the operation arms 12) start to move upward, the right and left electric motors 139 generate a small drive force for driving the right and left leg action portions 3 (the operation arms 12) downward (resistance against the upward movement of the right and left leg action portions 3 (the operation arms 12) is generated).

Next, based on the detection of the upward movement speed of the right and left leg action portions 3 (the operation arms 12), the small drive force (torque) generated by the right and left electric motors 139 gradually decreases (the resistance against the upward movement of the right and left leg action portions 3 (the operation arms 12) gradually decreases) such that the upward movement speed of the right and left leg action portions 3 (the operation arms 12) gradually increases from the stopped state.

As shown in Fig. 15, after the upward movement speed of the right and left leg action portions 3 (the operation arms 12) gradually increases from the stopped state, when the upward movement speed of the right and left leg action portions 3 (the operation arms 12) reaches a set value VD1, the small drive force (torque) generated by the right and left electric motors 139 is controlled such that the upward movement speed of the right and left leg action portions 3 (the operation arms 12) is maintained at the set value VD1.

As shown in Fig. 15, when the detection value of the right (left) angle sensor 149 approaches the upper limit angle U, the small drive force (torque) generated by the right and left electric motors 139 gradually increases (the resistance against the upward movement of the right and left leg action portions 3 (the operation arms 12) gradually increases) such that the upward movement speed of the right and left leg action portions 3 (the operation arms 12) gradually decreases.

Next, in the state where the detection value of the right (left) angle sensor 149 is close to the upper limit angle U, if the worker stops squatting (if the right and left leg action portions 3 (the operation arms 12) enter the stopped state), the upward movement speed of the right and left leg action portions 3 (the operation arms 12) gradually decreases until the right and left leg action portions 3 (the operation arms 12) enter the stopped state, and the small drive force (torque) generated by the right and left electric motors 139 is controlled such that the right and left leg action portions 3 (the operation arms 12) maintain the stopped state.

If the worker stops squatting at a midpoint between the angle A1 corresponding to the worker standing state and the upper limit angle U (half-sitting state) (if the right (left) angle sensor 149 detects that the right and left leg action portions 3 (the operation arms 12) have entered the stopped state), the small drive force (torque) generated by the right and left electric motors 139 is controlled such that the right and left leg action portions 3 (the operation arms 12) maintain the stopped state. Accordingly, the worker can easily maintain the half-sitting state.

If the worker in the half-sitting state then squats with a force that is larger than the small drive force (torque) generated by the right and left electric motors 139, the small drive force (torque) generated by the right and left electric motors 139 is controlled, based on the detection performed by the right and left angle sensors 149, such that the upward movement speed of the right and left leg action portions 3 (the operation arms 12) is maintained at the set value VD1.

### Modified embodiments of the second embodiment

The configuration of the assistance device according the present invention is not limited to the configuration described above. The following are representative examples of modified embodiments that can be applied alone or in combination.

### First modified embodiment

In the first state of load-object movement described in section [6] above, instead of the right and left leg action portions 3 (the operation arms 12) being driven downward when the worker described in section [7] above stands up, the following configuration is possible.

It is assumed that when the worker presses the raising operation switch 23, the right left is positioned on the forward side, and the left leg is positioned on the rearward side (the detection value of the right angle sensor 149 is closer to the upper limit angle U than the detection value of the left angle sensor 149 is).

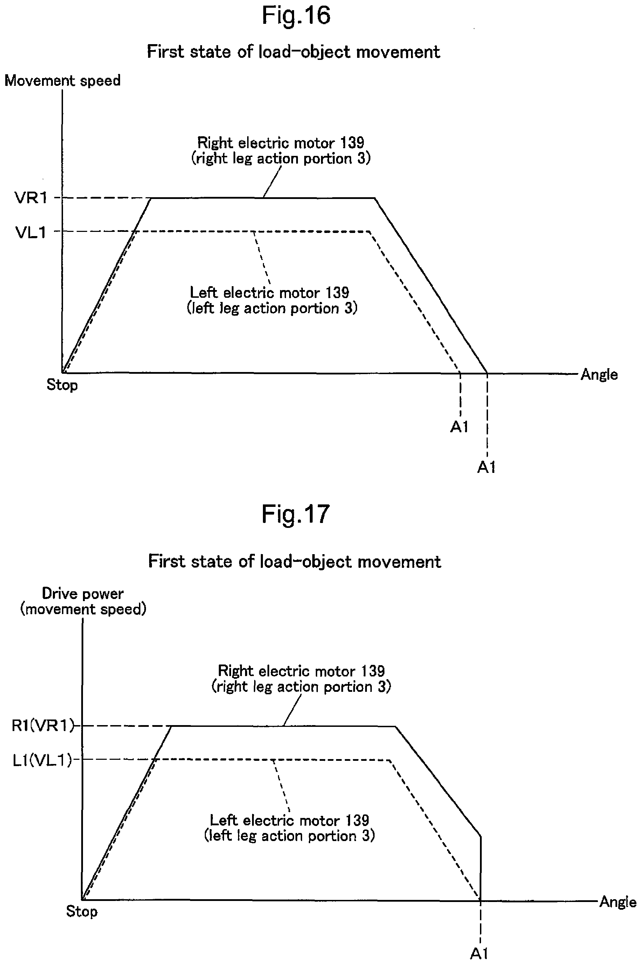

When the worker presses the raising operation switch 23 in the above-described state, as shown in Fig. 16, the right and left electric motors 139 in the stopped state (free rotation state) start to rotate, and the rotation speed gradually increases.

In this case, when the right and left leg action portions 3 (the operation arms 12) start to be driven downward, the downward movement speed of the right and left leg action portions 3 (the operation arms 12) is detected based on the detection values of the right and left angle sensors 149.

As shown in Fig. 16, at the same time as the downward movement speed of the right and left leg action portions 3 (the operation arms 12) gradually increases, a right set value VR1 and a left set value VL1 are set.

In this case, when the worker has pressed the raising operation switch 23, if the detection value of the right angle sensor 149 is closer to the upper limit angle U than the detection value of the left angle sensor 149 is, the right set value VR1 is set to a value that is larger than the left set value VL1. Conversely, when the worker has pressed the raising operation switch 23, if the detection value of the left angle sensor 149 is closer to the upper limit angle U than the detection value of the right angle sensor 149 is, the left set value VL1 is set to a value that is larger than the right set value VR1.

As shown in Fig. 16, after rotation speed of the right and left electric motors 139 has gradually risen, when the downward movement speed of the right leg action portion 3 (operation arm 12) reaches the right set value VR1, the right electric motor 139 is controlled such that the downward movement speed of the right leg action portion 3 (operation arm 12) is maintained at the right set value VR1.

When the downward movement speed of the left leg action portion 3 (operation arm 12) reaches the left set value VL1, the left electric motor 139 is controlled such that the downward movement speed of the left leg action portion 3 (operation arm 12) is maintained at the left set value VL1 (corresponding to the state where the rotation speed (movement speed) of the right (left) electric motor 139 becomes higher than the rotation speed (movement speed) of the left (right) electric motor 139).

As shown in Fig. 16, when the detection value of the right (left) angle sensor 149 reaches a value close to the angle A1 that corresponds to the worker standing state, the rotation speed of the right (left) electric motor 139 gradually decreases. Next, when the detection value of the right (left) angle sensor 149 reaches the angle A1 corresponding to the worker standing state, the right (left) electric motor 139 enters the stopped state (free rotation state).

In this case, as shown in Fig. 16, when the detection value of the left angle sensor 149 reaches the angle A1 corresponding to the worker standing state for example, the left electric motor 139 enters the stopped state (free rotation state) first, and then when the detection value of the right angle sensor 149 reaches the angle A1 corresponding to the worker standing state, the right electric motor 139 enters the stopped state (free rotation state). In the above-described state, there are also cases where the right electric motor 139 enters the stopped state (free rotation state) first, and then the left electric motor 139 enters the stopped state (free rotation state).

### Second modified embodiment

As shown in Fig. 17, a configuration is possible in which if at least one of the detection values of the right and left angle sensors 149 reaches the angle A1 corresponding to the worker standing state, the right and left electric motors 139 both enter the stopped state (free rotation state) at the same time.

Fig. 17 shows the state where the detection value of the left angle sensor 149 reaches the angle A1 corresponding to the worker standing state first, and the right and left electric motors 139 both enter the stopped state (free rotation state) at the same time. In this case, if the detection value of the right angle sensor 149 reaches the angle A1 corresponding to the worker standing state first, the right and left electric motors 139 both enter the stopped state (free rotation state) at the same time similarly to the above description.

### Third modified embodiment

Instead of the drive force (torque) of the right and left electric motors 139 gradually increasing when the worker presses the raising operation switch 23, a configuration is possible in which when the worker presses the raising operation switch 23, the drive force (torque) of the right and left electric motors 139 is immediately set to the right set value R1 and the left set value L1.

### Fourth modified embodiment

Instead of a configuration in which the rotation speeds of the right and left electric motors 139 gradually increases when the worker presses the raising operation switch 23, a configuration is possible in which when the worker presses the raising operation switch 23, the right and left electric motors 139 are controlled such that the downward movement speed of the right (left) leg action portion 3 (operation arm 12) is immediately set to the right set value VR1 (left set value VL1).

### Fifth modified embodiment

A configuration is possible in which a manually operable operation switch or the like is use to allow manual adjustment of the right set value R1 and the left set value L1 to a higher or lower value, and manual adjustment of the right set value VR1 and the left set value VL1 to a higher or lower value.

Alternatively, when the worker stands up, a configuration is possible in which the right and left electric motors 139 generate a given drive force (torque) (a configuration is possible in which the right and left electric motors 139 move at a given rotation speed).

According to this configuration, when the worker stands up, the worker can intentionally stand up slowly, or intentionally stand up quickly.

### Sixth modified embodiment

A configuration is possible in which right and left brakes (corresponding to resistance mechanisms) that apply damping to the upward movement of the right and left leg action portions 3 (the operation arms 12) are provided separately from the right and left electric motors 139, and sudden rising of the right and left thigh portions of the worker when the worker squats is suppressed by controlling the damping force applied by the right and left brakes, as with the right and left electric motors 139 described in section [9] above.

### Seventh modified embodiment

Instead of a configuration in which in the case where the worker presses the lowering operation switch 24, the upward movement speed of the right and left leg action portions 3 (operation arms 12) gradually increases from the stopped state, a configuration is possible in which when the worker presses the lowering operation switch 24, the small drive force (torque) generated by the right and left electric motors 139 is controlled (the right and left brakes are controlled) such that the upward movement speed of the right and left leg action portions 3 (the operation arms 12) is immediately set to the set value VD1.

### Eighth modified embodiment

A configuration is possible in which a manually operable operation switch or the like is use to allow manual adjustment of the set value VD1 to a higher or lower value.

Alternatively, a configuration is possible in which the set value VD1 is omitted, and the right and left electric motors 139 generate a constant small drive force (the right and left brakes generate a constant damping force) when the worker squats.

According to this configuration, it is possible to allowing the worker to intentionally squat slowly or intentionally squat quickly when squatting.

### Ninth modified embodiment

A configuration is possible in which the right and left arm portions 2, the driving device 17, the wires 18 and 19, and the right and left hand portions 20 are omitted, and the assistance device includes only functions that act on the right and left thigh portions of the worker, such as the main body portion 101 and the right and left leg action portions 3.

### [THIRD EMBODIMENT]

The following describes a third embodiment.

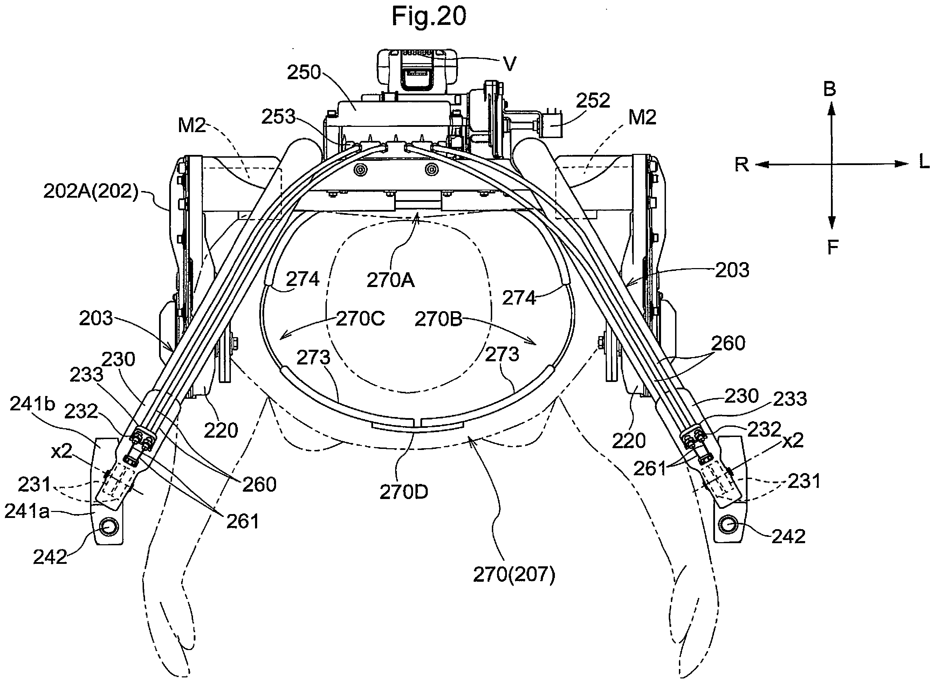

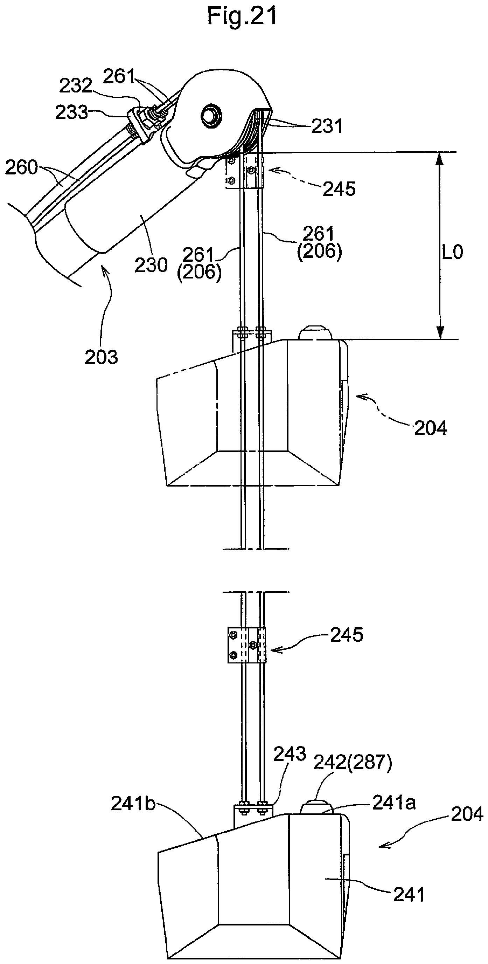

Unless particularly stated otherwise, in terms of the front-rear direction and the right-left direction, with the user wearing an assistive suit S (one example of an assistance device) on their back serving as the origin, the direction corresponding to forward relative to the user (see arrow F in Fig. 20) indicates the "front" direction of the assistive suit S. Similarly, the direction corresponding to rearward (see arrow B in Fig. 21) indicates the "back" direction, the direction corresponding to rightward (see arrow R in Fig. 20) indicates the "right" direction, and the direction corresponding to leftward (see arrow L in Fig. 20) indicates the "left" direction.

Also, although not illustrated, cover members made of a synthetic resin or metal are provided on appropriate portions of the assistive suit S in order to cover moving portions and portions that need protection.

### Overall configuration

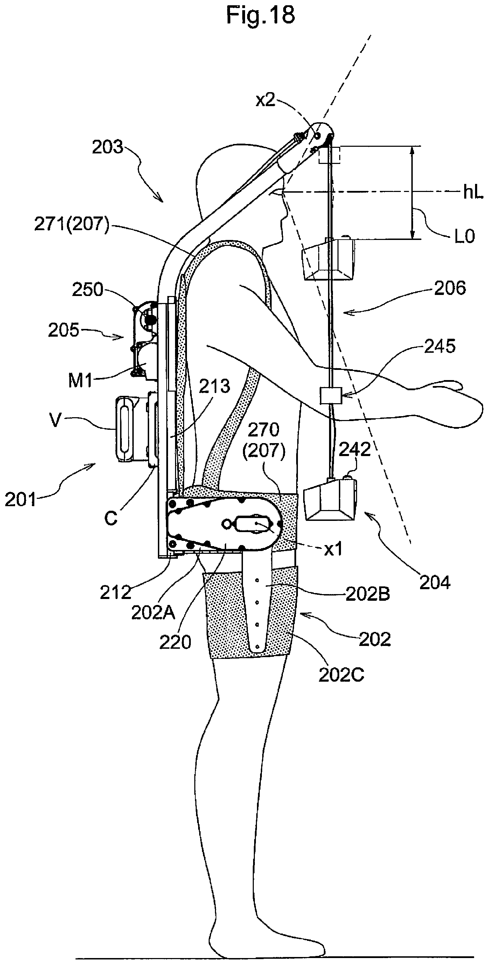

Figs. 18 to 20 show an example of the assistive suit S of the present invention.

This assistive suit S includes a main body portion 201 that has a flattened shape and can be worn on the user's back with use of a belt attachment tool 207.

A later-described leg portion operation device 202 and lifting arms 203 are attached to this main body portion 201, and grip operation tools 204 are attached to the lifting arms 203 via operation wires (control cables) 206 (corresponding to cord-like bodies).

Also, the main body portion 201 is provided with a winch 205 for driving the grip operation tools 204 attached via the operation wires 206, a control device C that controls operations of the leg portion operation device 202 and the winch 205, and a battery V for power supply, for example.

### Configuration of main body portion

The main body portion 201 is configured as a single body having a rectangular frame shape, and includes a pair of right and left vertical frames 210 that are made of a metal pipe and are provided upright along the up-down direction with a predetermined space therebetween, and a pair of upper and lower horizontal frames 211 and 212 that connect vertically intermediate portions of the vertical frames 210 together, as well as lower portions of the same together. The integration of the right and left vertical frames 210 and the upper and lower horizontal frames 211 and 212 can be performed by applying a means such as coupling by welding or coupling with use of bolts.

Lifting arms 203 that extend forward to a position beyond the shoulder portions of a user are provided in an upper portion of the main body portion 201. These lifting arms 203 are configured by metal pipe portions that extend diagonally forward and upward from upper portions of the vertical frames 210, and later-described grip operation tools 204 are attached thereto in a suspended state.

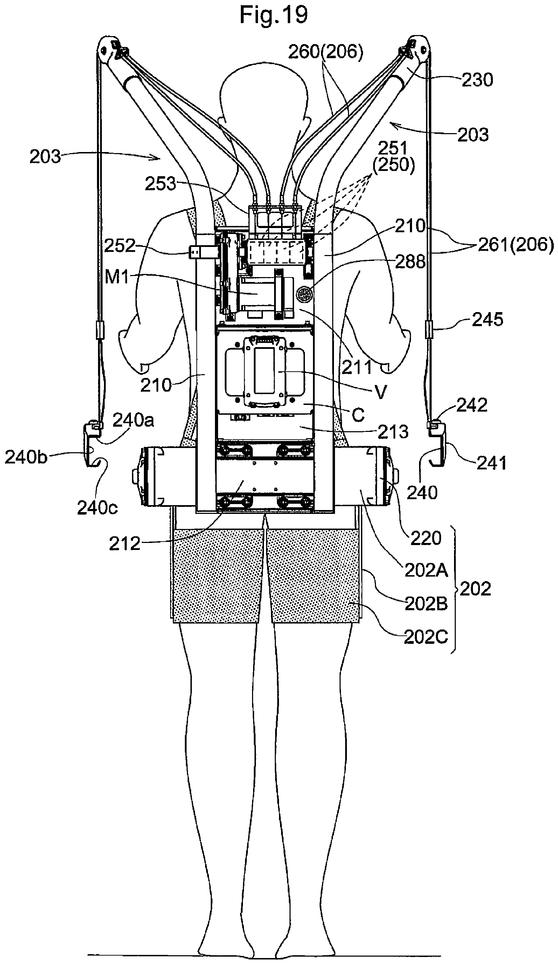

As shown in Figs. 18 and 19, out of the upper and lower horizontal frames 211 and 212, the horizontal frame 211 that is arranged on the upper side is provided with a reel device 250, which serves as the winch 205 for raising and lowering the grip operation tools 204, and a first electric motor M1 that drives the reel device 250.

The reel device 250 and the first electric motor M1 are arranged such that the rotation axes thereof extend in the horizontal direction, and such that the reel device 250 is located above the first electric motor M1 and conforms to the flattened surface of the horizontal frames 211. Accordingly, the main body portion 201 can have a low-profile design, and the amount of protrusion rearward from the main body portion 201 can be set as small as possible.

As shown in Figs. 18 to 20, leg portion operation devices 202 are separately attached to the right and left sides of the horizontal frame 212 on the lower side.

These leg portion operation devices 202 are coupled to the main body portion 201 and the thigh portions of the leg portions of the user, and the operation of the leg portion operation devices 202 presses downward the leg portions of the user when they are bent relative to the upper body. Accordingly, in this configuration, the standing-up movement of the user is assisted with the leg portions serving as reaction receiving points.

An intermediate attachment plate 213 is fixed spanning the right and left vertical frames 210 at an intermediate position between the upper horizontal frame 211 and the lower horizontal frame 212.

The control device C and the battery V are attached to the intermediate attachment plate 213; the control device C controls operations of the first electric motor M1 provided for the winch 205 and second electric motors M2 provided for the leg portion operation devices 202, and the battery V supplies driving electric power to the first electric motor M1 and the second electric motors M2. Specifically, the control device C is fixed to the intermediate attachment plate 213, and the battery V is fixed to the rear face side of a cover case C1 of the control device C.

As described above, in the main body portion 201, the reel device 250 of the winch 205 is arranged above the first electric motor M1 of the winch 205, the control device C, and the battery V, and therefore the length of the path of operation wires 206 extending to the grip operation tools 204 can be shortened, and the total amount of the wires can be reduced.

Also, the control device C, which is the hub of this assistive suit S, is guarded from above by the winch 205 and from below by the battery V, thus facilitating avoiding damage from collisions with other objects, and facilitating maintaining normal device control.

The battery V is used as a power supply for the first electric motor M1 of the winch 205, the control device C, the pair of right and left second electric motors M2 of the leg portion operation devices 202, various sensors (not shown), and the like.

The control device C is configured to receive signals from operation switches 242 of the later-described grip operation tools 204 and later-described detection sensors, and control the driving of corresponding devices.

### Leg portion operation device

The pair of right and left leg portion operation devices 202 are configured as described below.

As show in Figs. 18 to 20, the leg portion operation devices 202 each include a waist portion frame 202A that is L-shaped in a plan view, a swingable arm portion 202B that is supported at a front end portion of the waist portion frame 202A so as to be capable of swinging in the front-back direction about a horizontal axis x1, and an abutting portion 202C that is provided in a leading end portion of the swingable arm portion 202B and is capable of abutting against the thigh portion of the user.

The leg portion operation devices 202 each have an adjustable position configuration in which the positions of attachment to the horizontal frame 212 can be adjusted in the right-left direction such that the space between the right and left waist portion frames 202A can be adjusted to appropriately arrange the right and left leg portion operation devices 202 to suit the user's waist width and leg spacing, for example.

In the L shape of the waist portion frame 202A of each of the leg portion operation devices 202, the base-side portion that comes into contact with the lower horizontal frame 212 along the right-left direction is coupled to the horizontal frame 212 using bolts, and the leading-side portion that projects forward includes a gear box 220 for driving the swingable arm portion 202B to swing about the horizontal axis x1. The second electric motor M2 for driving the swingable arm portion 202B is coupled at a position behind the gear box 220. Rotation force from the second electric motor M2 passes through the gear box 220 and is converted into rotation force about the horizontal axis x1, and is transmitted to the swingable arm portion 202B in a reduced-speed state.

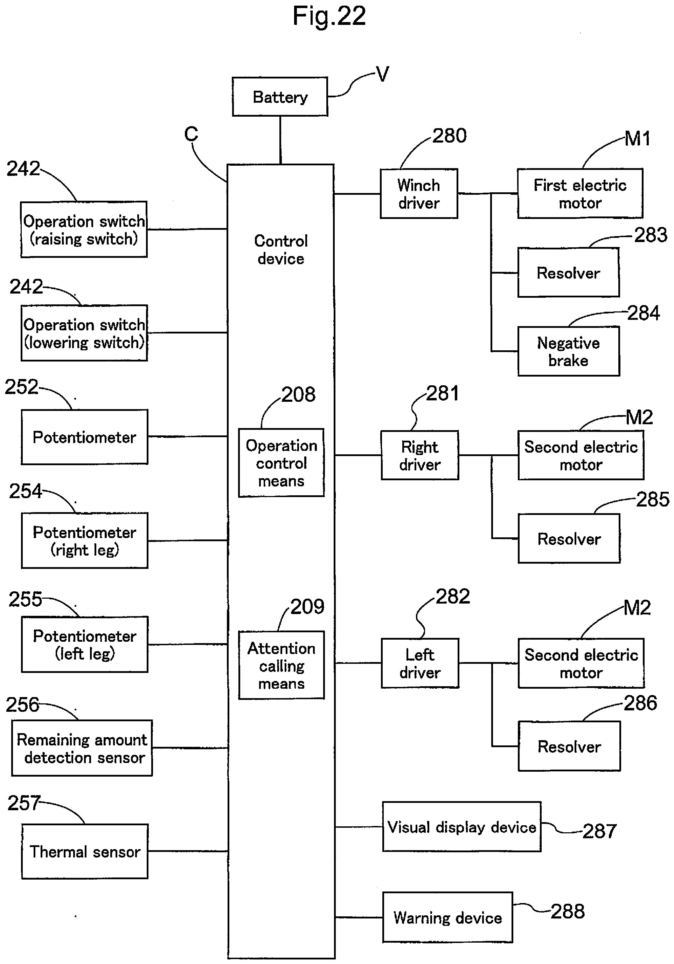

The driving of the leg portion operation devices 202 is performed based on detection signals obtained by sensors such as potentiometers 254 and 255 (see Fig. 22) that detect the relative orientation of the swingable arm portion 202B about the horizontal axis x1 relative to the waist portion frame 202A, and a potentiometer 252 that detects the rotation angle of the reel device 250, and operation signals from the operation switches 242 of the later-described grip operation tools 204. For this reason, the control device C can detect operation signals indicating operation of the operation switches 242 provided in the grip operation tools 204, detection signals indicating the relative orientations of the swingable arm portions 202B about the horizontal axis x1 relative to the waist portion frames 202A, and detection signals indicating the rotation angle of the reel device 250.

While the operation switches 242 provided in the grip operation tools 204 are not being operated, regardless of the relative orientations of the swingable arm portions 202B about the horizontal axis x1 relative to the waist portion frame 202A, an assist operation with respect to the leg portion operation devices 202 is not performed.

The assist operation of the leg portion operation device 202 is performed in the case of simultaneous detection of a rising operation performed on the operation switch 242 and detection that the results of detection of the relative orientations of the swingable arm portions 202B about the horizontal axis x1 relative to the waist portion frames 202A by the potentiometers 254 and 255 are predetermined angles or higher.

In other words, the assist operation is started if the control device C detects a detection signal indicating that a rising operation was performed on the operation switch 242 when the detected angle is an angle corresponding to the squatting orientation in which the user has lowered their waist.

### In this assist operation, the winding operation of the reel device 250 is prioritized, and first, the relative orientations of the swingable arm portions 202B about the horizontal axis x1 relative to the waist portion frames 202A are changed. That is to say, the swingable arm portions 202B are pressed downward about the horizontal axis x1 relative to the waist portion frames 202A so as to assist the user's movement from the squatting orientation to a standing-up orientation.

If it is detected that the relative orientations of the swingable arm portions 202B about the horizontal axis x1 relative to the waist portion frame 202A have changed to orientations that correspond to the standing-up orientation of the user, the reel device 250 winds the operation wires 206 (corresponding to cord-like bodies), thus assisting the operation of lifting the load-object upward from the standing-up orientation.

The reel device 250 unwinds the operation wires 206 if the control device C detects operation signals indicating that the operation switches 242 of the grip operation tools 204 have been operated for lowering, and detection signals indicating that the relative orientations of the swingable arm portions 202B about the horizontal axis x1 relative to the waist portion frame 202A correspond to the standing-up orientation of the user at the time when the switches are operated. In this unwinding, the unwinding limit of the reel device 250 is set such that the user can extend their arms while holding the grip operation tools 204.

If the operation switches 242 are operated for lowering even after the unwinding of the operation wires 206 by the reel device 250 has reached the limit, the relative orientations of the swingable arm portions 202B about the horizontal axis x1 relative to the waist portion frame 202A are changed so as to permit the user to move from the standing-up orientation to the squatting orientation. In this change in orientation, the swingable arm portions 202B are gradually moved in a direction opposite to the pressing-down direction about the horizontal axis x1 relative to the waist portion frame 202A, thus assisting the movement of the user for changing orientation so as to permit the user to move to the squatting orientation.

If the operations performed on the operation switches 242 of the grip operation tools 204 for raising or lowering are canceled, or the operation switches are operated for both raising and lowering at the same time, the winding or unwinding of the operation wires 206 by the reel device 250 is stopped, and the assist operation with respect to the leg portion operation devices 202 is canceled.

If both the raising operation and the lowering operation are not performed on the operation switch 242, a negative brake 284 (see Fig. 22) acts on the first electric motor M1 that drives the reel device 250, and movement for winding and unwinding the operation wires 206 is locked.

### Lifting arms

The lifting arms 203 that extend forward from the upper portion of the main body portion 201 are configured as described below. The lifting arms 203 are constituted by metal pipes that are integral with the vertical frames 210, the metal pipes that constitute the pair of right and left vertical frames 210 being bent forward on the upper portion side.

Specifically, in the metal pipes that constitute the vertical frames 210, the ranges that extend in the up-down direction from the waist portion to the shoulder portions of the user and connect the upper and lower horizontal frames 211 and 212 are used as the vertical frames 210, and the portions of the metal pipes that extent diagonally upward and forward from the upper portions of the vertical frames 210 to a position beyond the shoulder portions of the user are used as the lifting arms 203.

Rather than extending to a high position in order to avoid the user's head portion in a side view, these lifting arms 203 extend forward and upward while crossing the region lateral to the user's head portion in a side view. Accordingly, the upper end portions of the lifting arms 203 are set to a relatively low height position so as to not extend greatly beyond the top of the user's head portion.

Also, as shown in Fig. 18, the lifting arms 203 extend forward and upward while passing through a region above an eye line hL of the user when facing horizontally forward. The position of the upper end portions of the lifting arms 203 is set to a position that is likely to be in the user's field of view when facing horizontally forward. Specifically, the vertical angle of view of a person facing horizontally forward is normally said to be approximately 60 degrees upward and approximately 70 degrees downward (see the dashed line range in Fig. 18), and therefore the positions of the upper end portions of the lifting arms 203 are set within this field of view.

As shown in Figs. 19 and 20, the portions of the right and left metal pipes that constitute the vertical frames 210 are arranged substantially parallel to each other, whereas in the portions that constitute the lifting arms 203, the upper end sides of the right and left metal pipes are formed so as to be inclined and spread apart to the right and left while extending forward and upward.

The space between the vertical frames 210 in the right-left direction is set narrower than the shoulder width of the user (e.g., approximately half the shoulder width). Also, the space between the upper end portions of the lifting arms 203 in the right-left direction is set wider than the shoulder width of the user (e.g., approximately two times the shoulder width).

In a plan view, the front-rear positions of the upper end portions of the lifting arms 203 are farther forward than the positions of the shoulders of the user, and thus are set to positions forward of the user's face and trunk portion (e.g., near a vertical line at the tip of the user's toes) (see Fig. 18).

Two pulleys 231 are attached to each of the right and left upper end portions that extend forward from the lifting arms 203 having the above configuration, and these pulleys are attached so as to rotate about the same horizontal axis x2.

The two operation wires 206, which have one grip operation tool 204 attached to one end side, are hung on the two pulleys 231. Accordingly, a total of four operation wires 206 are hung on a total of four pulleys 231 of the right and left lifting arms 203.

The other end sides of the operation wires 206 are individually locked to four reel drums 251 (see Fig. 19) provided in the reel device 250, the four reel drums 251 operate at the same time along with a winding or unwinding operation of the reel device 250, and thus the four operation wires 206 are wound or unwound in the same direction at the same time.

End portion covers 230 that cover the upper and lateral sides of the pulleys 231 are attached to the upper end portions of the lifting arms 203. As shown in Figs. 20 and 21, a wire stopper portion 233, which is provided with an insertion hole 232 for an operation wire 206, is integrally provided in each of the end portion covers 230.

As shown in Fig. 21, the operation wires 206 are each constituted by a Bowden wire (Bowden cable) that includes an outer wire (outer cable) 260 and an inner wire (inner cable) 261. In these Bowden wires, the inner wires 261 are coupled to the grip operation tools 204 and the reel device 250, and the outer wires 260 protect and guide the inner wires 261. Ends on one side of the outer wires 260 are fixed to the wire stopper portion 233 at a position near the upper end portion of the lifting arm 203, and ends on the other side are fixed to a back portion wire stopper 253 at a position near the reel device 250.

### Grip operation tool

Out of the four operation wires 206 hung on the right and left lifting arms 203, the end portions of the two operation wires 206 hung on each of the lifting arms 203 are attached to one grip operation tool 204. The two operation wires 206 each have a strength capable of independently withstanding a preset load that is the allowable lifting load. There are cases where one of the operation wires 206 may break during use over an extended period, and the above configuration is for, even in such a case, making it possible for the one remaining operation wire 206 to maintain a load-object corresponding to the allowable lifting load in the suspended state.

Specifically, the lower end portions of the two inner wires 261 suspended from each of the lifting arms 203 are attached to one grip operation tool 204, and one of the two inner wires 261 is formed slightly longer than the other inner wire 261.

Specifically, out of the four reel drums 251 provided in the reel device 250, the inner wire 261 that is coupled to the reel drum 251 located one spot inward from the reel drum located on the outer side in the right-left direction is formed slightly longer than the inner wire 261 that is coupled to the reel drum on the outer side 251. It is desirable that the difference between the lengths of these two inner wires 261 is approximately the same as or larger than the amount of stretch that is predicted to occur in the shorter inner wire 261 over time due to the load of load-objects during normal use.

The lower end portions of the two inner wires 261 are coupled and fixed to an attachment bracket 243 that is provided on the upper face side of the grip operation tool 204.

By coupling the grip operation tool 204 to the lifting arm 203 in the state where the two inner wires 261 have a length difference, the longer one of the two inner wires 261 is affected almost not at all by the load of the lifted load-object, and the load is concentrated on the shorter one. Accordingly, although the two inner wires 261 are provided, one of the inner wires 261 is used as a normally-used inner wire 261, and the other inner wire 261 is used as an auxiliary means for maintaining the load-object in the suspended state even if the normally-used inner wire 261 breaks.

In this way, in the case where the load of the suspended load-object acts on only one of the inner wires 261, and the load of the suspended load-object does not act on the other inner wire 261, the load sharing percentage for the weight of the lifting target load-object is 100% for the former and 0% for the latter.

As shown in Figs. 18 to 21, the right and left grip operation tools 204 have right-left symmetrical shapes, and have a configuration in which a grip portion 241 made of a synthetic resin is integrally attached to the outer face of a hook portion 240 that is made of a metal.

The hook portions 240 are each formed with a channel shape by bending a metallic plate member, and include a flat plate-shaped upper portion 240a, a flat plate-shaped lateral portion 240b that is vertically oriented and extends downward from an outward portion of the upper portion 240a, and a flat plate-shaped lower portion 240c that extends inward from a lower portion of the lateral portion 240b.

The grip portion 241 is made of a synthetic resin, and is configured including a front upper face portion 241a shaped as a horizontal surface, and a rear upper face portion 241b (see Fig. 18) shaped as an inclined surface that extends diagonally rearward and downward from the front upper face portion 241a. A push-button type of operation switch 242 for a raising operation (or lowering operation) is provided in the front upper face portion 241a of the grip portion 241.

In the assistive suit S of this embodiment, the operation switch 242 of the right grip portion 241 is configured for a raising operation, and the operation switch 242 of the left grip portion 241 is configured for a lowering operation.

Note that the operation switches 242 are electrically connected to the control device C by cables that are not shown in the drawings, and thus operation signals for the operation switches 242 can be transmitted.

By hooking a lower portion 240c of the hook portion 240 to a load-object for example, and then operating the operation switch 242, it is possible to lift (or lower) the load-object.

Stoppers 245 that maintain a closest distance L0 from the grip operation tool 204 to the corresponding lifting arm 203 in a predetermined range are provided between the right and left lifting arms 203 and the right and left grip operation tools 204.

As shown in Figs. 18 and 21, the stoppers 245 are each coupled and fixed to the shorter one of the two inner wires 261 between the lifting arm 203 and the grip operation tool 204, which is the inner wire on which the load-object load acts in the normal usage state.

Accordingly, even if the grip portion 241 of the grip operation tool 204 is gripped, and the operation switch 242 for the raising operation is continuously operated, a sufficient space exists between the upper end portion of the lifting arm 203 and the upper face portion of the grip operation tool 204 when the grip operation tool 204 arrives at the upper limit position due to the winding operation of the winch 205. Therefore, even if some sort of problem occurs, such as a malfunction of the control system, and the winch 205 fails to stop and the grip operation tool 204 is wound, it is possible to mechanically prevent the grip operation tool 204 from moving greater than the closest distance L0 and coming abnormally close to the lifting arm 203.

### Belt attachment tool

The belt attachment tool 207 includes a waist belt 270 that is fixed to the lower horizontal frame 212 of the main body portion 201 and can be wrapped around the waist portion of the user, and shoulder belts 271 that are fixed spanning the lower horizontal frame 212 and the upper horizontal frame 211 and are to be hung on the shoulder portions of the user. The assistive suit S is worn on the user's back via the waist belt 270 and the shoulder belts 271 (see Figs. 18 to 20).

As shown in Fig. 20, the waist belt 270 is attached to the main body portion 201 via a waist portion frame 202A. The waist belt is configured to be capable of being worn in a state of surrounding the waist portion of the user.

Specifically, the waist belt 270 is configured including a rear surrounding portion 270A that extends from the rear face portion of the waist portion to the right and left side face portions, a left surrounding portion 270B that extends over the entirety of the left face portion of the waist portion, a right surrounding portion 270C that extends over the entirety of the right face portion of the waist portion, and a buckle portion 270D that can attach and detach the front end of the left surrounding portion 270B and the front end of the right surrounding portion 270C, and the length of the belt can be adjusted to suit the user's waist size with use of a belt length adjustment mechanism (not shown) provided in the buckle portion 270D.

Also, pads 273 capable of abutting against waist portions are integrally provided in inner peripheral portions of the waist belt 270 (the rear surrounding portion 270A, the left surrounding portion 270B, and the right surrounding portion 270C).

Buckle-type belt length adjustment mechanisms 274 (one example of a position changing mechanism) that enable adjusting the belt length are respectively provided in a coupling portion between the rear surrounding portion 270A and the left surrounding portion 270B and a coupling portion between the rear surrounding portion 270A and the right surrounding portion 270C.

By providing these belt length adjustment mechanisms 274, it is possible for the pads 273 provided in the left surrounding portion 270B and the right surrounding portion 270C to be adjusted to optimum positions on the user's flank portions so as to fit the physique of the user who will wear the assistive suit.

As shown in Fig. 18, the shoulder belts 271 are respectively provided on the right and left sides, with the upper end portions being attached to the upper horizontal frame 211, and the lower end portions being attached to the rear surrounding portion 270A of the waist belt 270. Also, the shoulder belts 271 exhibit a function of mainly preventing the state where the main body portion 201 becomes separated rearward from the mid back portion of the user.

Due to the waist belt 270 and the shoulder belts 271, the assistive suit S can be stably worn on the back of the user.

The weight of the assistive suit S and the load-object mainly acts on the waist portion of the user via the waist belt 270, and is stably supported by the waist portion.

### Control device

The control device C that controls operations of the leg portion operation device 202 and the winch 205 is configured as described below.

As shown in Fig. 22, the raising operation switch 242 attached to the right grip portion 241 and the lowering operation switch 242 attached to the left grip portion 241 are connected to the input side of the control device C.

Also, the potentiometer 252 that detects the rotation angle of the reel device 250 and the potentiometers 254 and 255 that detect the relative orientations of the swingable arm portions 202B about the horizontal axis x1 are electrically connected to the input side of the control device C.

The battery V, which supplies driving electric power to the first electric motor M1 that drives the reel device 250 and the second electric motor M2 provided in the leg portion operation device 202, is provided with a remaining amount detection sensor 256 (corresponding to a detection sensor that detects a state change) for detecting the remaining battery amount of the battery V. This remaining amount detection sensor 256 is also electrically connected to the input side of the control device C.

Also, the drive output system from the battery V to the first electric motor M1, which is the motor for driving the winch 205, is provided with a thermal sensor 257 (corresponding to a detection sensor that detects a state change) for detecting the heat generation temperature in this drive output system, and this thermal sensor 257 is also electrically connected to the input side of the control device C.

A winch driver 280 for controlling the driving of the first electric motor M1 in the winch 205, a right driver 281 for controlling the driving of the second electric motor M2 in the leg portion operation device 202 for the right leg, and a left driver 282 for controlling the driving of the second electric motor M2 in the leg portion operation device 202 for the left leg are provided on the output side of the control device C.

The winch driver 280 is connected to the first electric motor M1, a resolver 283 that detects a change in the current value of that first electric motor M1, and a negative brake 284 that brakes the first electric motor M1 when neither a raising rotation instruction nor a lowering rotation instruction are output to the first electric motor M1.

The right driver 281 is connected to the second electric motor M2 that drives the swingable arm portion 202B for the right leg, and a resolver 285 that detects a change in the current value of that second electric motor M2. The left driver 282 is connected to the second electric motor M2 that drives the swingable arm portion 202B for the left leg, and a resolver 286 that detects a change in the current value of that second electric motor M2.

The control device C is connected to a visual display device 287 (corresponding to an attention calling device) that visually display information regarding the detection results obtained by the remaining amount detection sensor 256 and the thermal sensor 257, and a warning device 288 (corresponding to an attention calling device) that audibly announces that information.

The visual display device 287 is constituted by an LED lamp integrated in the push-button type of operation switch 242 provided on the upper face side of the grip operation tool 204, and is configured to light up the upper portion of the push button.

The warning device 288 is constituted by a buzzer arranged in the upper portion of the main body portion 201.

The control device C is provided with an operation control means 208 that can alternatively switch and output one of multiple control instructions, including a steady operation mode in which the operation of the winch 205 is controlled in a pre-set steady-state operation mode, and a warning operation mode in which the winch 205 is operated in an operation mode that is different from the steady operation mode.

When the detection result of the remaining amount detection sensor 256, which is for detecting the remaining battery amount, is greater than or equal to a predetermined value that has been set in advance, this operation control means 208 outputs, to the winch driver 280, a control instruction for driving the winch 205 in the steady operation mode. If the detection result of the remaining amount detection sensor 256 is lower than the predetermined value, the operation control means 208 switches to and outputs, to the winch driver 280, a control instruction for driving the winch 205 in the warning operation mode.

Also, when the detection result of the thermal sensor 257, which is for detecting the heat generation temperature in the drive output system from the battery V to the first electric motor M1 that is the motor for driving the winch 205, is less than or equal to a predetermined value that has been set in advance, the operation control means 208 outputs, to the winch driver 280, a control instruction for driving the winch 205 in the steady operation mode. If the detection result of the thermal sensor 257 exceeds the predetermined value, the operation control means 208 switches to and outputs, to the winch driver 280, a control instruction for driving the winch 205 in the warning operation mode.

The predetermined values described above can be set as desired, but as one example, in the case of the remaining battery amount, it is sufficient to the set the predetermined value to at least a value that is greater than or equal to a remaining battery amount that is not a problem for using the winch 205 to lift the currently gripped load-object to the upper limit position. It is desirable that, whenever possible, a remaining battery amount that enables raising and lowering a load-object several times is set as the predetermined value.

In the case of the heat generation temperature in the drive output system, it is desirable that the predetermined value is set in a temperature range according to which there is no large negative influence on the first electric motor M1, the control device therefor, and the like.

In this case, the control instruction for the warning operation mode is prioritized as the control instruction that is output from the operation control means 208. In other words, if a control instruction for the steady operation mode is output based on either one of the detection result from the remaining amount detection sensor 256 and the detection result from the thermal sensor 257, and a control instruction for the warning operation mode is output based on the other detection result, the control instruction that is switched to and output to the winch driver 280 is the control instruction for driving in accordance with the control instruction for the warning operation mode, with priority over the control instruction for the steady operation mode.

Also, the control device C includes an attention calling means 209.

This attention calling means 209 outputs operation instructions to the visual display device 287 and the warning device 288 that serve as the attention calling devices. In the case where the control instruction output from the operation control means 208 is for the warning operation mode, the operation instruction output from this attention calling means 209 is output before or at the same time as the output of the aforementioned control instruction. Accordingly, an alert operation is performed by the visual display device 287 or the warning device 288, which serve as the attention calling devices, before the winch 205 starts operating in the warning operation mode or at the same time as it starts operating in the warning operation mode.

The winch 205 operates as follows in accordance with the control instruction output from the operation control means 208.

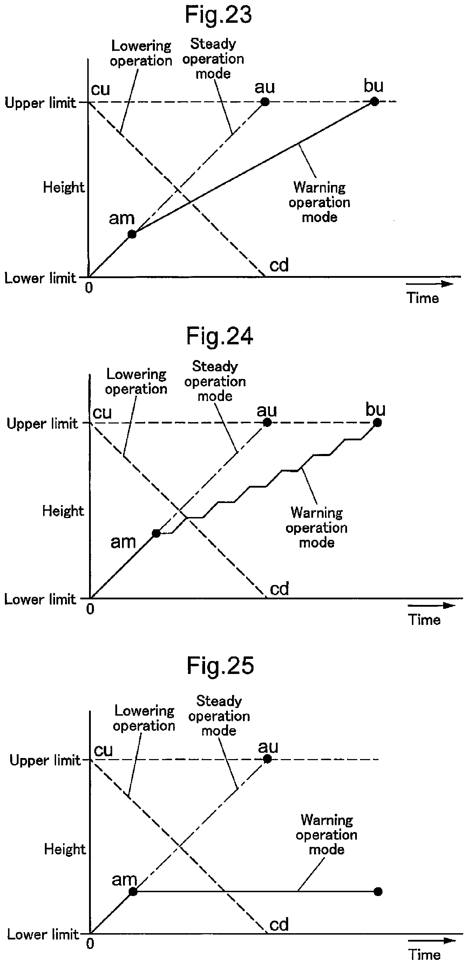

As shown in Fig. 23, when the winch 205 is driven in the steady operation mode, the operation wires 206 are wound by the winch 205 at a constant speed. Accordingly, the grip operation tools 204 at a lower limit start position o are linearly lifted at a constant speed to an upper limit position (au) as shown by the solid line and the dashed-dotted line. Also, at the time of the lowering operation, the grip operation tools 204 at a lowering start position (cu) are linearly lowered to a lower limit position (cd) as shown by the dashed line.

Also, at an intermediate position (am) for example, if it is detected that the remaining battery amount is less than or equal to a predetermined value or it is detected that the heat generation temperature of the drive output system is greater than or equal to a predetermined value, the winch 205 is driven in the warning operation mode. At this time, the speed of the winding of the operation wires 206 by the winch 205 is rapidly reduced, and the operation wires are wound at a gentle approximately 1/2 constant speed from the intermediate position (am) to another upper limit position (bu) as shown by the solid line. Accordingly, the fact that the winch 205 is being driven in the warning operation mode can be recognized from the operation state of the winch 205 itself.

As described above, in the case where the control instruction output from the operation control means 208 is for the warning operation mode, the attention calling means 209 outputs an operation instruction to the visual display device 287 or the warning device 288, and the fact that the state of being driven in the warning operation mode can be recognized visually or audibly.

Instead of the operation instruction that is output by the attention calling means 209 in the warning operation mode being output in a similar manner to both the visual display device 287 and the warning device 288, it can also be output differently to the visual display device 287 and the warning device 288.

Specifically, in the case of the warning operation mode when the detection sensor has detected that the remaining battery amount is less than or equal to a predetermined value, only the visual display device 287 operates, and the warning device 288 does not operate. Alternatively, in the case of the warning operation mode when the detection sensor has detected that the heat generation temperature in the drive output system is greater than or equal to a predetermined value, a configuration is possible in which only the warning device 288 operates, and the visual display device 287 does not operate.

According to such a configuration, it is easy to identify whether the warning operation mode is due to an insufficient remaining battery amount or due to heat in the drive output system.

### Modified embodiments of the third embodiment

The assistance device of the present invention is applicable to various types of assistive suits that are used while being worn by the user and that use motive power to assist work (operations) performed by the user. Therefore, the present invention is not limited to the embodiments described above. The following are representative examples of modified embodiments.

### First modified embodiment

The above embodiment illustrates a structure in which when the winch 205 is driven in the steady operation mode, the operation wires 206 are wound by the winch 205 at a constant speed, and in the warning operation mode, the speed of winding of the operation wires 206 by the winch 205 is rapidly decreased to a gentle constant speed, but there is no limitation to this structure.

For example, as shown in Fig. 24, when the winch 205 is driven in the steady operation mode, the operation wires 206 are wound by the winch 205 at a constant speed. Accordingly, the grip operation tools 204 at the lower limit start position o are linearly lifted at a constant speed to the upper limit position (au) as shown by the solid line and the dashed-dotted line. Also, at the time of the lowering operation, the grip operation tools 204 at the lowering start position (cu) are linearly lowered to the lower limit position c as shown by the dashed line.

Also, at the intermediate position (am) for example, if it is detected that the remaining battery amount is less than or equal to a predetermined value or it is detected that the heat generation temperature of the drive output system is greater than or equal to a predetermined value, the winch 205 is driven in the warning operation mode. At this time, the winding of the operation wires 206 by the winch 205 is performed through a so-called inching operation in which winding is performed intermittently by alternating between a winding operation and a winding stop operation, and the tools rise in a stepwise manner until reaching the other upper limit position bu. Accordingly, the fact that the winch 205 is being driven in the warning operation mode can be more clearly recognized from the operation state of the winch 205 itself.

It is sufficient that the other configurations are the same as those in the embodiment described above.

### Second modified embodiment

The above embodiment illustrates a structure in which when the winch 205 is driven in the steady operation mode, the operation wires 206 are wound by the winch 205 at a constant speed, and in the warning operation mode, the speed of winding of the operation wires 206 by the winch 205 is rapidly reduced to a gentle constant speed, or the operation wires are wound in a stepwise manner, but there is no limitation to this structure.

For example, as shown in Fig. 25, when the winch 205 is driven in the steady operation mode, the operation wires 206 are wound by the winch 205 at a constant speed. Accordingly, the grip operation tools 204 at the lower limit start position o are linearly lifted at a constant speed to the upper limit position (au) as shown by the solid line and the dashed-dotted line. Also, at the time of the lowering operation, the grip operation tools 204 at the lowering start position (cu) are linearly lowered to the lower limit position (cd) as shown by the dashed line.

Also, at the intermediate position (am) for example, if it is detected that the remaining battery amount is less than or equal to a predetermined value or it is detected that the heat generation temperature of the drive output system is greater than or equal to a predetermined value, the winch 205 is driven in the warning operation mode. At this time, the winding of the operation wires 206 by the winch 205 is stopped, and only the lowering operation is permitted. Accordingly, the fact that the winch 205 is being driven in the warning operation mode can be more clearly recognized from the operation state of the winch 205 itself.

It is sufficient that the other configurations are the same as those in the embodiment described above.

### Third modified embodiment

The above "second modified embodiment" describes a configuration in which in the warning operation mode, the winding of the operation wires 206 by the winch 205 is stopped, and only the lowering operation is permitted, but a configuration is possible in which, separately from the predetermined value described above, a means is provided for identifying whether or not the state is a state where a load-object is suspended by the grip operation tools 204, and in the case of the so-called "no load" state where a load-object is not being suspended by the grip operation tools 204, the restraining performed in the warning operation mode is cancelled, and the operation wires 206 are wound by the winch 205 at a constant speed.

In this case, the means for identifying whether or not the state is the load-object suspended state may be a different detection means that can detect a very light weight to the extent of the sum value of the weight of the operation wires 206 and the weight of the grip operation tools 204 themselves, and the load-object suspended state may be identified based on the detection result of that detection means.

It is sufficient that the other configurations are the same as those in the embodiment described above.

### Fourth modified embodiment

The above embodiment illustrates a structure in which when the winch 205 is driven in the steady operation mode, the operation wires 206 are wound by the winch 205 at a constant speed, and in the warning operation mode, the speed of winding of the operation wires 206 by the winch 205 is rapidly reduced to a gentle constant speed (approximately 1/2), or the operation wires are wound in a stepwise manner, but there is no limitation to this structure.

For example, the winding speed may be set to an appropriate speed such as a more gentle 1/3 speed, 1/1.5 speed, or the like. Also, a configuration is possible in which the set speed can be changed.

It is sufficient that the other configurations are the same as those in the embodiment described above.

### Fifth modified embodiment

Although the above embodiment illustrates a structure in which the lower end portions of the two inner wires 261 are coupled and fixed to the attachment brackets 243 provided on the upper face side of the grip operation tools 204, there is no limitation to this structure.

For example, configurations are possible in which the cord-like body is constituted by one operation wire 206, or three or more operation wires 206 are used. Also, there is no limitation to the operation wires 206, and belt-shaped bodies or the like may be used.

It is sufficient that the other configurations are the same as those in the embodiment described above.

### Sixth modified embodiment

Although the above embodiment illustrates a structure in which the visual display device 287 and the warning device 288 are both used as attention calling devices, a structure is possible in which only either one of the visual display device 287 and the warning device 288 is used, or both are omitted.

It is sufficient that the other configurations are the same as those in the embodiment described above.

### Seventh modified embodiment

Although the above embodiment illustrates a structure in which the belt attachment tool 207 is provided with both the waist belt 270 and the shoulder belts 271, there is no limitation to this structure.

For example, a configuration is possible in which the belt attachment tool 207 includes only the shoulder belts 271 or only the waist belt 270. In this case, if only the waist belt 270 is provided, it is desirable that a fixed shoulder hanging portion or the like is formed on the main body portion 201 instead of the shoulder belts 271.

It is sufficient that the other configurations are the same as those in the embodiment described above.

### Eighth modified embodiment

Although the above embodiment illustrates a structure in which the main body portion 201 is provided with both the winch 205 and the leg portion operation device 202, a structure is possible in which the leg portion operation device 202 is not provided, and only the winch 205 is provided.

It is sufficient that the other configurations are the same as those in the embodiment described above.

### INDUSTRIAL APPLICABILITY

The present invention is applicable to an assistance device that is used while being worn by a worker and assists work (operations) performed by the worker.

### DESCRIPTION OF REFERENCE SIGNS

### [First Embodiment]

- 1: main body portion
- 2: arm portion
- 3: leg action portion, support member
- 14: control device
- 18, 19: wire
- 20: hand portion
- 23, 24: manual operation portion
- 25-28: rotating bod
- 29: electric motor
- 35: rotation speed sensor
- 44: load detecting portion
- 46: set value change portion
- VU1, VU2, VU3: set rotation speed
- V2: predetermined value
- V3: set rotation speed

### [Second Embodiment]

- 101: main body portion
- 3: leg action portion
- 14: control device
- 23: manual operation portion
- 139: driving device, resistance device
- 149: angle sensor, speed detection device
- A1: angle corresponding to worker standing state
- VD1: set value

### [Third Embodiment]

- 201: main body portion
- 203: lifting arm
- 204: grip operation tool
- 205: winch
- 206: cord-like body
- 207: belt attachment tool
- 208: operation control means
- 256, 257: detection sensor
- 287, 288: attention calling device
- C: control device
- V: battery
- M1: drive motor

## Claims

1. An assistance device comprising:
a main body portion configured to be attached to a worker;
an arm portion that extends forward from the main body portion;
a wire that extends downward from the arm portion;
a hand portion that is coupled to the wire and is configured to hold a load-object by being held by a hand of the worker;
a rotating body configured to raise the hand portion by winding the wire, and to lower the hand portion by unwinding the wire;
an electric motor that drives the rotating body to rotate in a winding direction and an unwinding direction;
a rotation speed sensor that detects a rotation speed of the rotating body;
a manual operation portion configured to be operated manually; and
a control device configured to cause the electric motor to operate in the winding direction and the unwinding direction based on an operation signal from the manual operation portion,
wherein based on a detection value of the rotation speed sensor, the control device causes the electric motor to operate in the winding direction such that the rotating body rotates in the winding direction at a set rotation speed that is set in advance.

2. The assistance device according to claim 1, further comprising:
a set value change portion configured to, by being manually operated, change the set rotation speed to a faster speed or a slower speed.

3. The assistance device according to claim 2,
wherein a support member extends from the main body portion on a right side or a left side of a waist portion of the worker, and
the set value change portion is provided on the support member.

4. The assistance device according to claim 3, further comprising:
a right leg action portion that is supported by the main body portion and is configured to act on a right thigh portion of the worker; and
a left leg action portion that is supported by the main body portion and is configured to act on a left thigh portion of the worker,
wherein the control device causes the right and left leg action portions to move downward so as to move the right and left thigh portions of the worker downward to assist standing up of the worker, and
the right and left leg action portions are each the support member.

5. An assistance device comprising:
a main body portion configured to be attached to a worker;
an arm portion that extends forward from the main body portion;
a wire that extends downward from the arm portion;
a hand portion that is coupled to the wire and is configured to hold a load-object by being held by a hand of the worker;
a rotating body configured to raise the hand portion by winding the wire, and to lower the hand portion by unwinding the wire;
an electric motor that drives the rotating body to rotate in a winding direction and an unwinding direction;
a rotation speed sensor that detects a rotation speed of the rotating body;
a manual operation portion configured to be operated manually; and
a control device configured to cause the electric motor to operate in the winding direction and the unwinding direction based on an operation signal from the manual operation portion,
wherein in a state where the electric motor is operating in the unwinding direction, if a detection value of the rotation speed sensor changes to a value higher than a predetermined value, the control device causes the electric motor to generate drive force in the winding direction so as to apply resistance to unwinding direction rotation of the rotating body.

6. The assistance device according to claim 5,
wherein in a state where the electric motor is operating in the unwinding direction, if the detection value of the rotation speed sensor changes to a value higher than the predetermined value,
the control device causes the electric motor to generate drive force in the winding direction so as to apply resistance to unwinding direction rotation of the rotating body such that the rotating body rotates in the unwinding direction at a set rotation speed that is set in advance.

7. The assistance device according to claim 5 or 6, further comprising:
a load detecting portion configured to detect a load applied to the electric motor,
wherein if a detection value of the load detecting portion decreases rapidly, the control device causes the electric motor to stop.

8. An assistance device comprising:
a main body portion configured to be attached to a worker;
a right leg action portion that is supported by the main body portion and is configured to act on a right thigh portion of the worker;
a right driving device configured to drive the right leg action portion;
a left leg action portion that is supported by the main body portion and is configured to act on a left thigh portion of the worker;
a left driving device configured to drive the left leg action portion; and
a control device,
wherein the control device is configured to cause the right driving device and the left driving device to operate independently of each other,
when the right driving device operates according to the control device, the right driving device drives the right leg action portion downward to lower the right thigh portion of the worker, and
when the left driving device operates according to the control device, the left driving device drives the left leg action portion downward to lower the left thigh portion of the worker.

9. The assistance device according to claim 8, further comprising:
a right angle sensor configured to detect an angle of the right leg action portion relative to the main body portion; and
a left angle sensor configured to detect an angle of the left leg action portion relative to the main body portion,
wherein the control device causes the right driving device to stop if the right leg action portion reaches an angle corresponding to a worker standing state based on a detection value of the right angle sensor, and
the control device causes the left driving device to stop if the left leg action portion reaches an angle corresponding to a worker standing state based on a detection value of the left angle sensor.

10. The assistance device according to claim 8, further comprising:
a right angle sensor configured to detect an angle of the right leg action portion relative to the main body portion; and
a left angle sensor configured to detect an angle of the left leg action portion relative to the main body portion,
wherein the control device causes the right and left driving devices to stop if at least one of the right and left leg action portions reaches an angle corresponding to a worker standing state based on detection values of the right and left angle sensors.

11. The assistance device according to any one of claims 8 to 10, further comprising:
a right angle sensor configured to detect an angle of the right leg action portion relative to the main body portion;
a left angle sensor configured to detect an angle of the left leg action portion relative to the main body portion; and
a manual operation portion configured to give, to the control device, an activation signal indicating starting of operation of the right and left driving devices,
wherein based on detection values of the right and left angle sensors at a time of operation of the manual operation portion, the control device causes the right and left driving devices to operate such that a drive force of a driving device of one of the right and left leg action portions that is at a higher location is larger than a drive force of a driving device of the other of the right and left leg action portions that is at a lower location.

12. The assistance device according to any one of claims 8 to 10, further comprising:
a right angle sensor configured to detect an angle of the right leg action portion relative to the main body portion;
a left angle sensor configured to detect an angle of the left leg action portion relative to the main body portion; and
a manual operation portion configured to give, to the control device, an activation signal indicating starting of operation of the right and left driving devices,
wherein based on detection values of the right and left angle sensors at a time of operation of the manual operation portion, the control device causes the right and left driving devices to operate such that a movement speed of a driving device of one of the right and left leg action portions that is at a higher location is faster than a movement speed of a driving device of the other of the right and left leg action portions that is at a lower location.

13. An assistance device comprising:
a main body portion configured to be attached to a worker;
a leg action portion that is supported by the main body portion and is configured to act on a thigh portion of the worker; and
a resistance device configured to apply resistance to upward movement of the leg action portion.

14. The assistance device according to claim 13, further comprising:
a driving device configured to drive the leg action portion downward so as to lower the thigh portion of the worker; and
a control device configured to control the driving device,
wherein the resistance device is the driving device, and
when the control device causes the driving device to generate drive force for driving the leg action portion downward, the driving device applies resistance to upward movement of the leg action portion.

15. The assistance device according to claim 14, further comprising:
a speed detection device configured to detect an upward movement speed of the leg action portion,
wherein the control device controls the driving device such that a detection value of the speed detection device becomes a set value that is set in advance.

16. The assistance device according to claim 15,
wherein if the speed detection device detects that the leg action portion entered a stopped state, the control device controls the driving device such that the leg action portion maintains the stopped state.

17. The assistance device according to claim 15 or 16, further comprising:
an angle sensor configured to detect an angle of the leg action portion relative to the main body portion,
wherein if a detection value of the angle sensor changes from an angle corresponding to a worker standing state toward an angle corresponding to a worker squatting state, the control device controls the driving device such that the detection value of the speed detection device gradually increases from a lower speed value than the set value to the set value.

18. The assistance device according to any one of claims 15 to 17, further comprising:
an angle sensor configured to detect an angle of the leg action portion relative to the main body portion,
wherein if the detection value of the angle sensor changes from an angle approaching an angle corresponding to a worker squatting state toward an angle corresponding to a worker squatting state, the control device controls the driving device such that the detection value of the speed detection device gradually decreases from the set value to a low speed value.

19. An assistance device comprising:
a main body portion capable of being worn by a user;
a lifting arm that extends from the main body portion to a position forward and upward of the user in a worn state;
a lifting cord-like body that extends from a leading end portion of the lifting arm; and
a grip operation tool that is mounted to an extending-side end portion of the cord-like body and is capable of being engaged to and disengaged from a load-object to be lifted,
wherein the main body portion includes
a winch configured to wind and unwind the cord-like body,
a battery configured to supply driving electric power to a driving motor of the winch,
a control device configured to control operations of the winch, and
a detection sensor configured to detect a state change of a pre-set detection target item in a drive output system ranging from the battery to the driving motor,
the control device includes an operation control means for alternatively outputting a steady operation mode in which operation of the winch is controlled in a pre-set steady-state operation mode, and a warning operation mode in which the winch is caused to operate in an operation mode that is different from the steady operation mode, and
the operation control means outputs a control instruction for the steady operation mode to the winch when a detection value of the state change of the detection target item obtained by the detection sensor is in a predetermined range, and the operation control means switches to and outputs, to the winch, a control instruction for the warning operation mode if the detection value of the state change is outside the predetermined range.

20. The assistance device according to claim 19,
wherein the detection target item of the detection sensor is a remaining battery amount in the battery,
the operation control means outputs the control instruction for the steady operation mode to the winch if a detection value of the remaining battery amount obtained by the detection sensor is greater than or equal to a predetermined value, and
the operation control means outputs the control instruction for the warning operation mode to the winch if the detection value of the remaining battery amount obtained by the detection sensor is less than the predetermined value.

21. The assistance device according to claim 19,
wherein the detection target item of the detection sensor is a heat generation temperature in the drive output system ranging from the battery to the driving motor,
the operation control means outputs the control instruction for the steady operation mode to the winch if a detection value of the heat generation temperature obtained by the detection sensor is less than or equal to a predetermined value, and
the operation control means outputs the control instruction for the warning operation mode to the winch if the detection value of the heat generation temperature obtained by the detection sensor exceeds the predetermined value.

22. The assistance device according to any one of claims 19 to 21,
wherein in the warning operation mode, the operation control means outputs a low-speed operation instruction for reducing a speed of winding of the cord-like body by the winch to a speed lower than a winding speed in the steady operation mode.

23. The assistance device according to any one of claims 19 to 21,
wherein in the warning operation mode, the operation control means outputs an inching operation instruction for intermittently changing a speed of winding of the cord-like body by the winch to a high speed and a low speed.

24. The assistance device according to any one of claims 19 to 21,
wherein in the warning operation mode, the operation control means outputs a lifting restriction instruction according to which winding of the cord-like body by the winch is stopped, and only lowering of the cord-like body by the winch is permitted.

25. The assistance device according to any one of claims 19 to 24, further comprising:
an attention calling device for announcing an attention item to the user,
wherein in the warning operation mode, an announcing operation is performed by the attention calling device before or at the same time as output of a control instruction to the winch.
